(19) Europäisches Patentamt
European Patent Office
Office européen des brevets

(11) EP 4 220 448 A1

(12) EUROPEAN PATENT APPLICATION
published in accordance with Art. 153(4) EPC

(43) Date of publication:
02.08.2023 Bulletin 2023/31

(51) International Patent Classification (IPC):
G06F 17/16 (2006.01)

(21) Application number: 21871059.8

(22) Date of filing: 03.08.2021

(52) Cooperative Patent Classification (CPC):
G06F 17/16

(86) International application number:
PCT/CN2021/110357

(87) International publication number:
WO 2022/062682 (31.03.2022 Gazette 2022/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.09.2020 CN 202011036325
27.09.2020 CN 202011036302

(71) Applicant: Cambricon (Xi'an) Semiconductor Co.,
Ltd.
Xi'an City, Shaanxi 710116 (CN)

(72) Inventors:
• TAO, Jinhua
Beijing 100191 (CN)
• LIU, Shaoli
Beijing 100191 (CN)

(74) Representative: Huang, Liwei
Cäcilienstraße 12
40597 Düsseldorf (DE)

(54) DATA PROCESSING DEVICE, INTEGRATED CIRCUIT CHIP, DEVICE, AND IMPLEMENTATION METHOD THEREFOR

(57) The present disclosure relates to a data processing apparatus, a method, an integrated circuit chip, an electronic device, and a board card. The data processing apparatus is included in a computing apparatus. The computing apparatus is included in a combined processing apparatus. The combined processing apparatus includes a general interconnection interface and other processing apparatus. The computing apparatus interacts with other processing apparatus to jointly complete a computing operation specified by a user. The combined processing apparatus further includes a storage apparatus. The storage apparatus is connected to the computing apparatus and other processing apparatus, respectively. The storage apparatus is used to store data of the computing apparatus and other processing apparatus. A solution of the present disclosure is widely used in various conversions of multi-dimension data and improves data conversion efficiency.

FIG. 15

EP 4 220 448 A1

**Description**

**CROSS REFERENCE OF RELATED APPLICATIONS**

The present application claims priority to: Chinese Patent Application No. 202011036302.6 with the title of "Data Processing Apparatus, Integrated Circuit Chip, Device, and Implementation Method Therefor" filed on September 27, 2020; and Chinese Patent Application No. 202011036325.7 with the title of "Data Processing Apparatus, Integrated Circuit Chip, Device, and Implementation Method Therefor" filed on September 27, 2020. The contents of the aforementioned applications are incorporated herein by reference in their entireties.

**TECHNICAL FIELD**

The present disclosure generally relates to a data processing field. More specifically, the present disclosure relates to a data processing apparatus, an integrated circuit chip, an electronic device, a board card, and an implementation method for the data processing apparatus.

**BACKGROUND**

Operations in the field of artificial intelligence usually involve processing of multi-dimensional data (such as a two-dimensional matrix or a three-dimensional array). Taking processing of the two-dimensional matrix as an example, conversion operations of the two-dimensional matrix may include transposition, rotation, or mirroring. For such conversion operations, at present, dedicated matrix operation custom circuits are usually used for implementations. However, designs of these matrix operation circuits are relatively complex, and interfaces and functions of these matrix operation circuits are relatively fixed. Moreover, a kind of matrix operation circuit may only process a corresponding type of matrix conversion, and the matrix operation circuit is unable to perform a plurality of types of conversion operations of the matrix according to actual requirements. Therefore, how to acquire a data processing apparatus that may convert the multi-dimensional data becomes a problem that is required to be solved in the prior art.

Further, in a computing system, an instruction set is a set of instructions used to perform computing and control the computing system. Moreover, the instruction set plays a key role in improving performance of a computing chip (such as a processor) in the computing system. At present, various computing chips (especially chips in the field of artificial intelligence), by using associated instruction sets, may complete various general or specific control operations and data processing operations. However, there are many defects in the existing instruction set. For example, limited by a hardware architecture, the existing instruction set performs poorly in flexibility. Further, there is still improvement room for the existing instruction in converting various data types, especially in describing and processing the multi-dimensional data.

**SUMMARY**

In order to at least solve technical problems mentioned in the BACKGROUND, a solution of the present disclosure provides a computing architecture and an instruction system that may efficiently process multi-dimensional data. The solution of the present disclosure will be described in many aspects below.

A first aspect of the present disclosure provides a data processing apparatus, including a data caching circuit and a data conversion circuit. The data caching circuit is configured to perform data caching. The data conversion circuit is configured to perform write and read operations on to-be-converted data in the data caching circuit according to a data conversion instruction, so as to implement a data conversion on the to-be-converted data.

A second aspect of the present disclosure provides an implementation method for a data processing apparatus. The data processing apparatus includes a data caching circuit and a data conversion circuit. The method includes: using the data caching circuit to perform data caching; and using the data conversion circuit to perform write and read operations on to-be-converted data in the data caching circuit according to a data conversion instruction, so as to implement a data conversion on the to-be-converted data.

A third aspect of the present disclosure provides an integrated circuit chip, including the data processing apparatus described in the first aspect above.

A fourth aspect of the present disclosure provides an electronic device, including the integrated circuit chip described in the third aspect above.

A fifth aspect of the present disclosure provides a board card, including the integrated circuit chip described in the third aspect above.

Through the data processing apparatus, the integrated circuit chip, the electronic device, the board card, and the method of the present disclosure described above, the solution of the present disclosure may implement a data conversion on data such as the multi-dimensional data by using the data conversion instruction. Specifically, by using the data conversion instruction to perform the write and read operations on the to-be-converted data in the data caching circuit, the solution of the present disclosure may implement various operations such as addressing, moving, and deformation of the multi-dimensional data. Further, since the data conversion operations are implemented by means of the instruction, the solution of the present disclosure reduces changes in the hardware architecture and improves data conversion efficiency. Additionally, by using a descriptor, the solution of the present disclosure facilitates the addressing and storage of the multi-dimensional data, thereby improving execution efficiency of the write and read operations on the multi-dimensional data. As such, efficiency of a multi-dimensional data conversion may be improved.

**BRIEF DESCRIPTION OF DRAWINGS**

By reading the following detailed description with reference to drawings, the above and other objects, features and technical effects of exemplary implementations of the present disclosure will become easier to understand. In the drawings, several implementations of the present disclosure are shown in an exemplary manner rather than a restrictive manner, and the same or corresponding reference numerals indicate the same or corresponding parts.

FIG. 1 shows a schematic diagram of a data processing apparatus according to an embodiment of the present disclosure.
FIG. 2 shows a schematic diagram of a computing apparatus according to an embodiment of the present disclosure.
FIGs. 3-8 respectively show flowcharts of various operations of a data conversion circuit according to embodiments of the present disclosure.
FIG. 9 shows a flowchart of an implementation method for a data processing apparatus according to an embodiment of the present disclosure.
FIG. 10 shows a schematic diagram of data storage space used for multi-dimensional data according to an embodiment of the present disclosure.
FIGs. 11-13 respectively show flowcharts of various operations of a data conversion circuit according to embodiments of the present disclosure.
FIG. 14 shows a flowchart of an implementation method for a data processing apparatus according to an embodiment of the present disclosure.
FIG. 15 shows a structural diagram of a combined processing apparatus according to an embodiment of the present disclosure.
FIG. 16 shows a schematic structural diagram of a board card according to an embodiment of the present disclosure.

**DETAILED DESCRIPTION**

Technical solutions in embodiments of the present disclosure will be described clearly and completely hereinafter in combination with drawings in the embodiments of the present disclosure. Embodiments to be described are merely some rather than all embodiments of the present disclosure. All other embodiments obtained by those skilled in the art based on the embodiments of the present disclosure without creative efforts shall fall within the scope of protection of the present disclosure.

It should be understood that terms such as "first", "second", "third", and "fourth" in the claims, the specification, and the drawings of the present disclosure are used for distinguishing different objects rather than describing a specific order. Terms such as "including" and "comprising" used in the specification and the claims of the present disclosure indicate the presence of a feature, an entity, a step, an operation, an element, and/or a component, but do not exclude the existence or addition of one or more other features, entities, steps, operations, elements, components, and/or collections thereof.

It should also be understood that terms used in the specification of the present disclosure are merely for a purpose of describing a particular embodiment rather than limiting the present disclosure. As being used in the specification and the claims of the present disclosure, unless the context clearly indicates otherwise, singular forms such as "a", "an", and "the" are intended to include plural forms. It should also be understood that a term "and/or" used in the specification and the claims of the present disclosure refers to any and all possible combinations of one or more of relevant listed items and includes these combinations.

As being used in the specification and the claims of the present disclosure, a term "if' may be interpreted as "when", or "once" or "in response to a determination" or "in response to a case where something is detected" depending on the context. Similarly, depending on the context, a clause "if it is determined that" or "if [a described condition or event] is detected" may be interpreted as "once it is determined that", or "in response to a determination", or "once [a described condition or event] is detected", or "in response to a case where [a described condition or event] is detected".

Specific implementations of the present disclosure will be described in detail in combination with drawings below.

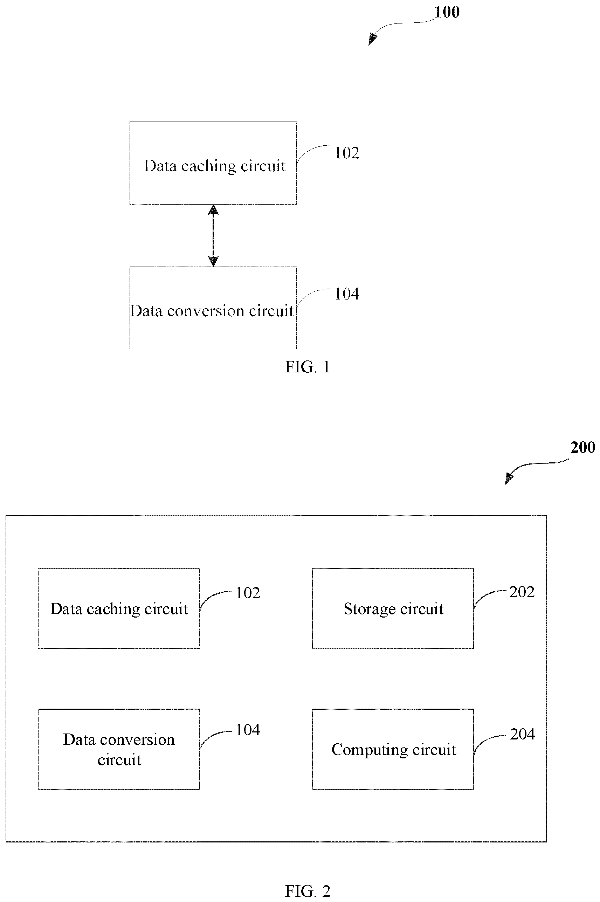

FIG. 1 shows a schematic diagram of a data processing apparatus 100 according to an embodiment of the present disclosure. As shown in FIG. 1, the data processing apparatus 100 includes a data caching circuit 102 and a data conversion circuit 104. In an embodiment, the data caching circuit may be configured to perform data caching. In an exemplary application scenario, data that is suitable for being cached by the data caching circuit of the present disclosure may be multi-dimensional data, including, for example, tensor data. In an embodiment, the data conversion circuit may be configured to perform write and read operations on to-be-converted data (such as the multi-dimensional data) in the data caching circuit according to a data conversion instruction, so as to implement a data conversion on the to-be-converted data. For example, by writing and reading the to-be-converted data in different ways, a solution of the present disclosure may perform conversion operations on the to-be-converted data in various spatial positions, so as to obtain converted data. Taking three-dimensional data as an example, by using the solution of the present disclosure, transposition, mirroring, or multi-angle (such as 90 degrees or 180 degrees) rotation operations on the three-dimensional data may be implemented. In an application scenario, when the to-be-converted data is a to-be-converted matrix (two-dimensional data), the data caching circuit may include a caching storage array. The caching storage array is used to cache matrix data written by the data conversion circuit or written by the data conversion circuit after conversion in the write operation; or the caching storage array is used to transfer the matrix data to the data conversion circuit in the read operation, so that the data conversion circuit performs appropriate conversions when transferring the matrix data to an external memory or a computing unit.

In an embodiment, when the to-be-converted data is the multi-dimensional data, the data conversion instruction may include data volume information and inter-dimension offset information about performing the write and read operations in each dimension in the multi-dimensional data. In an exemplary scenario, the data volume information may include the number of data required to be written and read in each dimension, while the inter-dimension offset information includes an address interval required to be spanned from a current dimension to a next dimension. In another exemplary scenario, the address interval is determined according to the number of data in the current dimension and space occupied by each piece of data.

For example, when the multi-dimensional data is data with three dimensions including length, width and height, for data in the length or width direction (one dimension), the data volume information may be information about the number of data in the length or width direction, a size of the data in the length or width direction, and/or space occupied by each piece of data in the length or width direction. Further, the inter-dimension offset information may be inter-dimension offset information from one-dimensional data in the length or width direction to two-dimensional data in the length and width directions or inter-dimension offset information from the two-dimensional data in the length and width directions to three-dimensional data in the length, width, and height directions. For example, the inter-dimension offset information may be the number of data and/or an address space offset spanning from a previous low dimension to a next high dimension.

To facilitate reading and writing the multi-dimensional data, the present disclosure proposes to define an M-dimensional counter. In other words, there are M one-dimensional counters, which are N_1, N_2, N_3,... N_M, respectively. When counting, after an n-th counter records a period N_n (such as a period from 0 to N_n), the n-th counter may be zeroed, and an n +1-th counter may add 1. Based on the definition of the M-dimensional counter, the present disclosure proposes to maintain an M-dimensional read counter and a read pointer and maintain an M-dimensional write counter and a write pointer. The M-dimensional read counter may be expressed as R_cnt ( i_1, i_2, i_3 ... i_M), and correspondingly, the read pointer may be expressed as R_p = R_addr + i_1 * s_0 + i_2 * s_1 + .... + s_M-1 * n_M, where R_addr is a read base address. During a read process, each time R_n0 elements are read, the M-dimensional counter R_cnt may add 1. Similarly, the M-dimensional write counter may be expressed as W_cnt (i_1, i_2, i_3 ... i_M), and correspondingly, the write pointer may be expressed as W_p = W_addr + i_1 * s_0 + i_2 * s_1 + .... + s_M-1 * n_M, where W_addr is a write base address.

Based on the M-dimensional read counter and the M-dimensional write counter, the solution of the present disclosure may write R_n0 elements into the data caching circuit via the data conversion circuit and then read W_n0 elements from the data caching circuit through the data conversion circuit, so as to implement the data conversion on the to-be-converted data. For example, according to the data conversion instruction, by using the data write and read operations, for the multi-dimensional data, the data conversion circuit may selectively output part of the data, rotate the data at an angle, and mirror or transpose the data.

The composition and operations of the data processing apparatus of the present disclosure are described above in combination with FIG. 1. Based on the above description, those skilled in the art may understand that the data processing apparatus of the present disclosure uses the data conversion instruction to convert the multi-dimensional data, which improves execution efficiency of a multi-dimensional data conversion. Additionally, by using the data conversion circuit to perform various different write and read operations on the multi-dimensional data to convert the data, the solution of the present disclosure simplifies the complexity of a multi-dimensional data conversion operation and speeds up the progress of the multi-dimensional data conversion. Therefore, the solution of the present disclosure also reduces overheads of data processing. Moreover, in a computing scenario that requires a data conversion, the solution of the present disclosure improves computing efficiency and reduces computing overheads.

FIG. 2 shows a schematic block diagram of a computing apparatus 200 according to an embodiment of the present disclosure. As shown in FIG. 2, the computing apparatus 200 may include the data processing apparatus 100 described above in combination with FIG. 1. In other words, the computing apparatus 200 may include the data caching circuit 102 and the data conversion circuit 104 shown in the figure. Since the data processing apparatus of the present disclosure has been described in detail in combination with FIG. 1 above, and specific descriptions about the data caching circuit 102 and the data conversion circuit 104 are also applicable to the computing apparatus 200, the same content will not be repeated herein.

As shown in the figure, the computing apparatus of the present disclosure further includes a computing circuit 204 and a storage circuit 202. According to different application scenarios, here, the computing circuit and the storage circuit may be implemented in different ways. In an embodiment, the storage circuit may take the form of a memory, such as a DRAM (dynamic random access memory) or a DDR SDRAM (double data rate synchronous dynamic random access memory). The storage circuit may be used to store operation data required by the computing circuit for performing operations or data used for exchange with an external memory. When the computing apparatus of the present disclosure is applied in the field of artificial intelligence, the operation data or to-be-exchanged data may be data in various related fields. For example, the data may be various training data in machine learning, network model data and parameters, and various types of to-be-detected data (such as image data, and the like).

In another embodiment, the computing circuit may take the form of a general or dedicated processor and a general or dedicated processor core. The computing circuit may include various types of operators and various types of buses (such as a data bus, a control bus, or a broadcast bus). When the solution of the present disclosure is applied in the field of artificial intelligence, the computing circuit may be implemented or included in a single-core or multi-core deep learning processor, so as to implement various computing operations. In an application scenario, when the computing circuit is implemented as the processor core, the computing circuit may be packaged with the data caching circuit and the data conversion circuit together, so as to form the processor. In this situation, the data caching circuit may be implemented as the cache of the computing apparatus, so as to save data and instructions that are most frequently accessed by the computing circuit in the memory (such as the storage circuit 202). As such, the computing circuit is not required to read required data and instructions from a memory that runs relatively slowly.

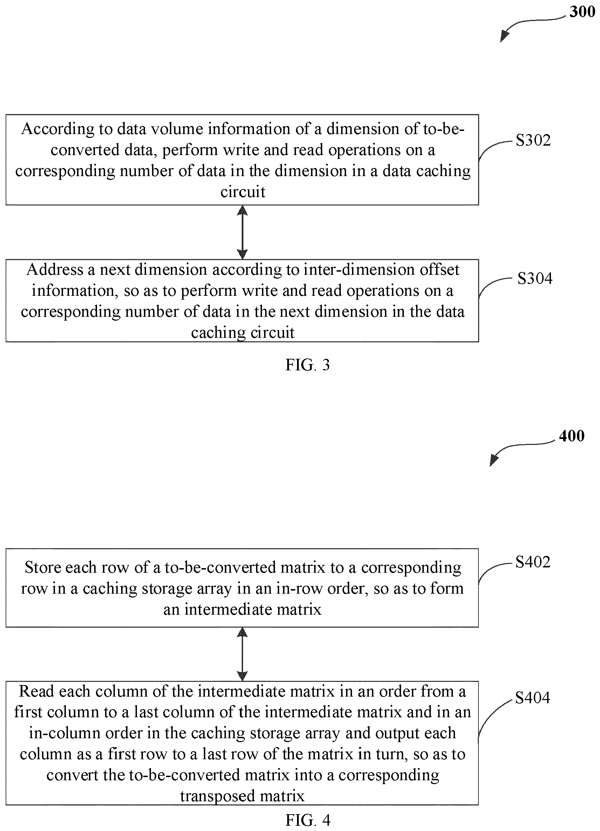

FIGs. 3-8 respectively show flowcharts of various operations of a data conversion circuit according to embodiments of the present disclosure. As described earlier, the data conversion circuit of the present disclosure acquires data volume information and/or inter-dimension offset information of multi-dimensional data according to a data conversion instruction. Moreover, the data conversion circuit of the present disclosure implements different types of write and read operations on the multi-dimensional data in conjunction with the data caching circuit, thereby implementing a data conversion on the multi-dimensional data. Various exemplary operations will be described in detail in combination with FIGs. 3-8 below.

FIG. 3 exemplarily shows a process 300 of a data conversion circuit of the present disclosure in performing write and read operations. Specifically, in a step S302, the data conversion circuit may be configured to, according to data volume information of a dimension of to-be-converted data, perform write and read operations on a corresponding number of data in the dimension in a data caching circuit. In other words, the data conversion circuit of the present disclosure may write one or a plurality of pieces of data into the data caching circuit or read the one or the plurality of data from the data caching circuit in the same dimension, thereby implementing processing of data of a particular dimension in the multi-dimensional data. Further, in a step S304, the data conversion circuit may be configured to address a next dimension according to inter-dimension offset information, so as to perform write and read operations on a corresponding number of data in the next dimension in the data caching circuit. It may be shown that, in this situation, after performing write and read operations on data in a current dimension, the data conversion circuit may perform write and read operations on data in a next dimension by using the inter-dimension offset information, thereby implementing conversion operations of data in a plurality of continuous dimensions. Further, by using the inter-dimension offset information, conversion operations of inter-dimension data may also be implemented.

Based on the operations shown in FIG. 3 above, in an embodiment, the data conversion instruction may further include the write base address information (W_addr) and the read base address information (R_addr). In performing the write and read operations, the data conversion circuit may be further configured to address the next dimension according to the write base address information and the inter-dimension offset information to perform the write operation and to address the next dimension according to the read base address information and the inter-dimension offset information to perform the read operation. It may be shown that, by using the base address information, the data conversion circuit may more accurately and efficiently locate multi-dimensional data required to be written and read. Further, by introducing the base address information, ways to locate the multi-dimensional data may be increased, and space for addressing may also be extended. Additionally, by introducing the base address information and the inter-dimension offset information, the data processing apparatus of the present disclosure may implement various operations on the multi-dimensional data based on the data conversion instruction. The operations may be one or more operations selected from a bypass operation, a multi-angle rotation operation, a mirroring operation, or a sequential conversion operation of the multi-dimensional data.

As described earlier, in an implementation scenario, when the multi-dimensional data is implemented as a two-dimensional matrix, the data caching circuit of the present disclosure may include a caching storage array. In an embodiment, a size of the caching storage array may be determined according to the number of rows X of a to-be-converted matrix, the number of columns Y of the to-be-converted matrix, and storage space K occupied by basic elements in the matrix. Specifically, according to the number of rows X of the to-be-converted matrix, the number of columns Y of the to-be-converted matrix, and the storage space K occupied by the basic elements in the matrix, the data processing apparatus of the present disclosure may also be configured with one caching storage array matching the size of the to-be-converted matrix. Storage space occupied by basic elements of the caching storage array is greater than or equal to K. The number of rows of the caching storage array is greater than or equal to the greater of X and Y. The number of columns of the caching storage array is greater than or equal to the greater of X and Y. The above setting of the size of the caching storage array is to satisfy that the to-be-converted matrix may be written into the caching storage array according to a preset access method. For example, when X is not equal to Y, the number of rows and the number of columns are exchanged under a transposition operation, and the number of rows and the number of columns of the caching storage array formed according to the above setting may support such changes in the number of rows and the number of columns during a matrix conversion process. Of course, when X is equal to Y, as long as the number of rows of the caching storage array is greater than or equal to any one of X and Y and the number of columns of the caching storage array is greater than or equal to any one of X and Y, the above operations may be implemented.

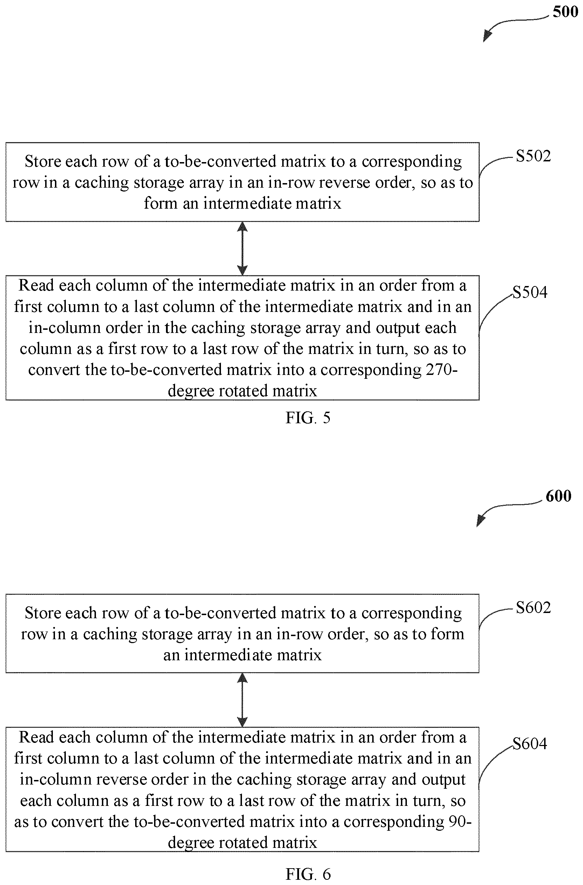

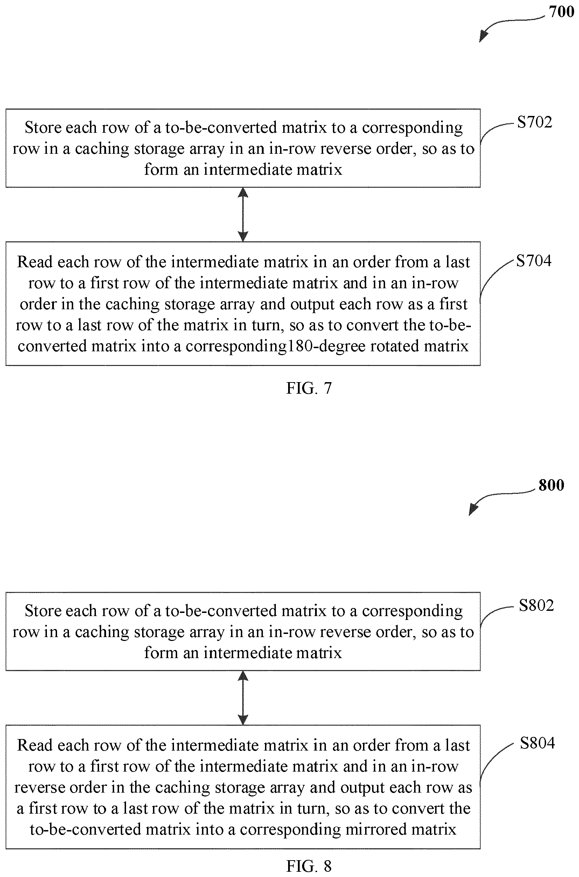

In different scenarios, the data conversion circuit of the present disclosure may be operated in conjunction with the caching storage array, so as to perform corresponding write and read operations on the two-dimensional matrix, thereby implementing various operations on the two-dimensional matrix. According to the present disclosure, the operations may be, for example, a transposition operation shown in FIG.4, a 270-degree rotation operation shown in FIG. 5, a 90-degree rotation operation shown in FIG. 6, a 180-degree rotation operation shown in FIG. 7, and a mirroring operation shown in FIG. 8. These operations will be described in detail in combination with FIGs. 4-8 below.

FIG. 4 shows a matrix transposition process 400 performed by a data conversion circuit of the present disclosure according to a data conversion instruction. As shown in FIG. 4, in a step S402, the data conversion circuit may store each row of a to-be-converted matrix to a corresponding row in a caching storage array in an in-row order according to the data conversion instruction, so as to form an intermediate matrix. Next, in a step S404, the data conversion circuit may read each column of the intermediate matrix in an order from a first column to a last column of the intermediate matrix and in an in-column order in the caching storage array and then output each column as a first row to a last row of the matrix in turn, so as to convert the to-be-converted matrix into a corresponding transposed matrix.

Specifically, it is assumed that the to-be-converted matrix is an X*Y matrix, where X may be equal to Y or may not be equal to Y. The data conversion circuit may store a first row of the X*Y matrix in an order from a first basic element to a Y-th basic element to positions from a first basic element position to a Y-th basic element position in a first row of the caching storage array, respectively. The data conversion circuit repeats such operations in an order from a first row to an X-th row of the X*Y matrix until the X-th row of the X*Y matrix is stored in the order from the first basic element to the Y-th basic element to positions from a first basic element position to a Y-th basic element position in an X-th row of the caching storage array, respectively. As such, an (X*Y) intermediate matrix is formed. This intermediate matrix may be understood as copying the to-be-converted matrix to the caching storage array. Then, the data conversion circuit reads first basic elements from the first row to the X-th row of the (X*Y) intermediate matrix in order. Moreover, the data conversion circuit concatenates X read basic elements into one row in order and uses this row as a first row of the transposed matrix. The data conversion circuit repeats such operations in the order from the first basic element to the Y-th basic element until Y-th basic elements from the first row to the X-th row of the (X*Y) intermediate matrix are read in the order. Moreover, X read basic elements are concatenated into one row in order and used as a Y-th row of the transposed matrix. As such, the transposed matrix is formed.

FIG. 5 shows a process 500 of rotating a matrix by 270 degrees performed by a data conversion circuit of the present disclosure according to a data conversion instruction. As shown in FIG. 5, in a step S502, the data conversion circuit may store each row of a to-be-converted matrix to a corresponding row in a caching storage array in an in-row reverse order according to the data conversion instruction, so as to form an intermediate matrix. Next, in a step S504, the data conversion circuit may read each column of the intermediate matrix in an order from a first column to a last column of the intermediate matrix and in an in-column order in the caching storage array and then output each column as a first row to a last row of the matrix in turn, so as to convert the to-be-converted matrix into a corresponding 270-degree rotated matrix.

Specifically, it is assumed that the to-be-converted matrix is an X*Y matrix, where X may be equal to Y or may not be equal to Y. The data conversion circuit may store a first row of the X*Y matrix in an order from a Y-th basic element to a first basic element to positions from a first basic element position to a Y-th basic element position in a first row of the caching storage array, respectively. The data conversion circuit repeats such operations in an order from a first row to an X-th row of the X*Y matrix until the X-th row of the X*Y matrix is stored in the order from the Y-th basic element to the first basic element to positions from a first basic element position to a Y-th basic element position in an X-th row of the caching storage array, respectively. As such, an X*Y intermediate matrix is formed. This intermediate matrix may be understood as being formed by in-row mirroring of each row of the to-be-converted matrix. Then, the data conversion circuit may read first basic elements from the first row to the X-th row of the X*Y intermediate matrix in order. Moreover, the data conversion circuit concatenates X read basic elements into one row in order and uses this row as a first row of the rotated matrix. The data conversion circuit repeats such operations in an order from the first basic element to the Y-th basic element until Y-th basic elements from the first row to the X-th row of the X*Y intermediate matrix are read in the order. Moreover, X read basic elements are concatenated into one row in order and used as a Y-th row of the rotated matrix. As such, the 270-degree rotated matrix is formed.

FIG. 6 shows a process 600 of rotating a matrix by 90 degrees performed by a data conversion circuit of the present disclosure according to a data conversion instruction. As shown in FIG. 6, in a step S602, the data conversion circuit may store each row of a to-be-converted matrix to a corresponding row in a caching storage array in an in-row order, so as to form an intermediate matrix. Next, in a step S604, the data conversion circuit may read each column of the intermediate matrix in an order from a first column to a last column of the intermediate matrix and in an in-column reverse order in the caching storage array and then output each column as a first row to a last row of the matrix in turn, so as to convert the to-be-converted matrix into a corresponding 90-degree rotated matrix.

Specifically, it is assumed that the to-be-converted matrix is an X*Y matrix, where X may be equal to Y or may not be equal to Y. The data conversion circuit may store a first row of the X*Y matrix in an order from a first basic element to a Y-th basic element to positions from a first basic element position to a Y-th basic element position in a first row of the caching storage array, respectively. The data conversion circuit repeats such operations in an order from a first row to an X-th row of the X*Y matrix until the X-th row of the X*Y matrix is stored in the order from the first basic element to the Y-th basic element to positions from a first basic element position to a Y-th basic element position in an X-th row of the caching storage array, respectively. As such, an X*Y intermediate matrix is formed. This intermediate matrix may be understood as copying the to-be-converted matrix to the caching storage array. Then, the data conversion circuit may read the first row of the X*Y intermediate matrix in an order from the Y-th basic element to the first basic element and use this row as a first row of the rotated matrix. The data conversion circuit repeats such operations in the order from the first row to the X-th row of the X*Y intermediate matrix until the X-th row of the X*Y matrix is read in the order from the Y-th basic element to the first basic element and used as an X-th row of the rotated matrix. As such, the 90-degree rotated matrix is formed.

FIG. 7 shows a process 700 of rotating a matrix by 180 degrees performed by a data conversion circuit of the present disclosure according to a data conversion instruction. As shown in FIG. 7, in a step S702, the data conversion circuit may store each row of a to-be-converted matrix to a corresponding row in a caching storage array in an in-row reverse order, so as to form an intermediate matrix. Next, in a step S704, the data conversion circuit may read each row of the intermediate matrix in an order from a last row to a first row of the intermediate matrix and in an in-row order in the caching storage array and then output each row as a first row to a last row of the matrix in turn, so as to convert the to-be-converted matrix into a corresponding 180-degree rotated matrix.

Specifically, it is assumed that the to-be-converted matrix is an X*Y matrix, where X may be equal to Y or may not be equal to Y. The data conversion circuit may store a first row of the X*Y matrix in an order from a Y-th basic element to a first basic element to positions from a first basic element position to a Y-th basic element position in a first row of the caching storage array, respectively. The data conversion circuit repeats such operations in an order from a first row to an X-th row of the X*Y matrix until the X-th row of the X*Y matrix is stored in the order from the Y-th basic element to the first basic element to positions from a first basic element position to a Y-th basic element position in an X-th row of the caching storage array, respectively. As such, an X*Y intermediate matrix is formed. This intermediate matrix may be understood as being formed by in-row mirroring of each row of the to-be-converted matrix. Next, the data conversion circuit may read the X-th row of the X*Y intermediate matrix in an order from the first basic element to the Y-th basic element and use this row as a first row of the rotated matrix. The data conversion circuit repeats such operations in an order from the X-th row to the first row of the intermediate matrix until the first row of the X*Y intermediate matrix is read in the order from the first basic element to the Y-th basic element and used as an X-th row of the rotated matrix. As such, the 180-degree rotated matrix is formed.

FIG. 8 shows a process 800 of a matrix mirroring operation performed by a data conversion circuit of the present disclosure according to a data conversion instruction. As shown in FIG. 8, in a step S802, the data conversion circuit may store each row of a to-be-converted matrix to a corresponding row in a caching storage array in an in-row reverse order, so as to form an intermediate matrix. Next, in a step S804, the data conversion circuit may read each row of the intermediate matrix in an order from a last row to a first row of the intermediate matrix and in the in-row reverse order in the caching storage array and then output each row as a first row to a last row of the matrix in turn, so as to convert the to-be-converted matrix into a corresponding mirrored matrix.

Specifically, it is assumed that the to-be-converted matrix is an X*Y matrix, where X may be equal to Y or may not be equal to Y. The data conversion circuit may store a first row of the X*Y matrix in an order from a Y-th basic element to a first basic element to positions from a first basic element position to a Y-th basic element position in a first row of the caching storage array, respectively. The data conversion circuit repeats such operations in an order from a first row to an X-th row of the X*Y matrix until the X-th row of the X*Y matrix is stored in the order from the Y-th basic element to the first basic element to positions from a first basic element position to a Y-th basic element position in an X-th row of the caching storage array, respectively. As such, an X*Y intermediate matrix is formed. This intermediate matrix may be understood as being formed by in-row mirroring of each row of the to-be-converted matrix. Then, the data conversion circuit may read the X-th row of the X*Y intermediate matrix in the order from the Y-th basic element to the first basic element and use this row as a first row of the mirrored matrix. The data conversion circuit repeats such operations in an order from the X-th row to the first row of the intermediate matrix until the first row of the X*Y intermediate matrix is read in the order from the Y-th basic element to the first basic element and used as an X-th row of the mirrored matrix. As such, the mirrored matrix is formed.

The above has described that the to-be-converted matrix is stored in the caching storage array in a preset manner to form the intermediate matrix and then the intermediate matrix is read to obtain a converted matrix in combination with FIGs. 4-8. It may be understood that, when space occupied by the caching storage array is greater than the to-be-converted matrix (the intermediate matrix), operations on the intermediate matrix may also be viewed as operations on valid basic elements in the caching storage array. Additionally, it should be noted that five examples of matrix conversion operations implemented by the data conversion circuit are described above. These examples are used only for illustrative rather than restrictive purposes. The data conversion circuit of the present disclosure may also implement other conversions of the matrix according to the data conversion instruction.

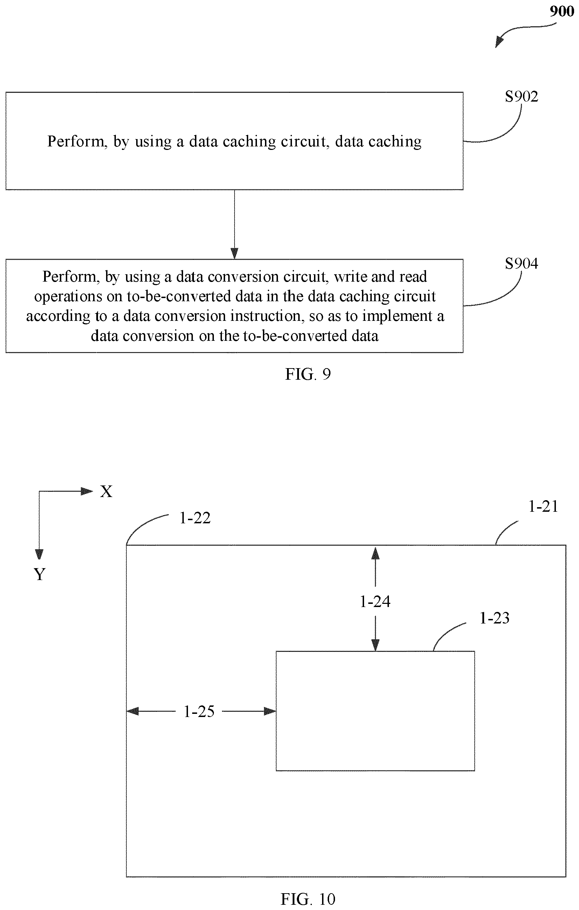

FIG. 9 is a flowchart of an implementation method 900 for a data processing apparatus according to an embodiment of the present disclosure. It may be understood that here, the data processing apparatus is the data processing apparatus discussed in combination with FIGs. 1-8 above. Therefore, the above description of the data processing apparatus is also applicable to a solution shown in FIG. 9, and the same will not be repeated herein.

As shown in FIG. 9, in a step S902, the method 900 uses a data caching circuit to perform data caching. According to different embodiments of the present disclosure, here, data may be multi-dimensional data, such as a two-dimensional matrix or a three-dimensional array. In a step S904, the method 900 uses a data conversion circuit to perform write and read operations on to-be-converted data in the data caching circuit according to a data conversion instruction, so as to implement a data conversion on the to-be-converted data. Although the above is not shown in FIG. 9, those skilled in the art may understand that method 900 may perform various operations of the data processing apparatus described in combination with FIGs. 1-8.

A further solution of the data processing apparatus 100 of the present disclosure will be described in combination with FIG. 1 below.

As shown in FIG. 1, the data caching circuit 102 in the data processing apparatus 100 may be configured to cache multi-dimensional data. In an exemplary application scenario, the multi-dimensional data of the present disclosure may include tensor data with two or more dimensions. In an embodiment, the data conversion circuit 104 may be configured to perform write and read operations on the multi-dimensional data in the data caching circuit according to a data conversion instruction, so as to implement a data conversion on the multi-dimensional data. For example, by writing and reading to-be-converted data in different ways, a solution of the present disclosure may perform conversion operations on the multi-dimensional data in various spatial positions, so as to obtain converted data. In an embodiment, the data conversion instruction may include a descriptor used for indicating a shape of the multi-dimensional data. The descriptor may be used to determine a storage address corresponding to the multi-dimensional data. Further, the data conversion circuit may be configured to perform the write and read operations on the multi-dimensional data according to the storage address.

In an embodiment, the data conversion instruction of the present disclosure may include identification of the descriptor and/or content of the descriptor. The content of the descriptor may include at least one shape parameter representing the shape of the multi-dimensional data and/or at least one address parameter representing an address of the multi-dimensional data. In another embodiment, the address parameter of the multi-dimensional data may include a base address of a data datum point of the descriptor in data storage space of the multi-dimensional data. In another embodiment, the data conversion instruction may include data volume information and/or inter-dimension offset information about performing write and read operations in each dimension in the multi-dimensional data. Moreover, the data volume information and/or the inter-dimension offset information may be determined according to the address parameter and/or the shape parameter in the descriptor.

Based on the above discussion of a plurality of embodiments, in an exemplary implementation scenario, the shape parameter of the multi-dimensional data of the present disclosure may include at least one of followings: a size of the data storage space in at least one of N dimensional directions, a size of a storage area of the multi-dimensional data in at least one of N dimensional directions, an offset of the storage area in at least one of N dimensional directions, positions of at least two vertices at diagonal positions of N dimensional directions relative to the data datum point, and a mapping relationship between a data description position of the multi-dimensional data indicated by the descriptor and a data address of the multi-dimensional data indicated by the descriptor, where N is an integer greater than or equal to 0.

By using the descriptor included in the data conversion instruction, the solution of the present disclosure may perform a plurality of types of conversion operations on the multi-dimensional data. The conversion operations include but are not limited to a data mirroring operation, a multi-angle data rotation operation, or a data transposition operation. Taking three-dimensional data as an example, by using the solution of the present disclosure, transposition, mirroring, or multi-angle (such as 90 degrees or 180 degrees) rotation operations of the three-dimensional data may be implemented. In an application scenario, when the to-be-converted data is a to-be-converted matrix (two-dimensional data), the data caching circuit may include a caching storage array. The caching storage array may be used to cache matrix data written by the data conversion circuit or written by the data conversion circuit after conversion in the write operation; or the caching storage array may be used to transfer the matrix data to the data conversion circuit in the read operation, so that the data conversion circuit may perform appropriate conversions when transferring the matrix data to an external memory or a computing unit.

In an embodiment, when the to-be-converted data is the multi-dimensional data, the data conversion instruction may include such a descriptor. The descriptor includes data volume information and inter-dimension offset information about performing the write and read operations by each dimension of the multi-dimensional data. In an exemplary scenario, the data volume information may include the number of data required to be written and read in each dimension, while the inter-dimension offset information may include an address interval required to be spanned from a current dimension to a next dimension. In another exemplary scenario, the address interval is determined according to the number of data in the current dimension and space occupied by each piece of data.

For example, when the multi-dimensional data is data with three dimensions including length, width and height, for data in the length or width direction (one dimension), the data volume information may be information about the number of data in the length or width direction, a size of the data in the length or width direction, and/or space occupied by each piece of data in the length or width direction. Further, the inter-dimension offset information may be inter-dimension offset information from one-dimensional data in the length or width direction to two-dimensional data in the length and width directions or inter-dimension offset information from the two-dimensional data in the length and width directions to three-dimensional data in the length, width, and height directions. For example, the inter-dimension offset information may be the number of data and/or an address space offset spanning from a previous low dimension to a next high dimension.

To facilitate reading and writing the multi-dimensional data, the present disclosure also proposes to define an M-dimensional counter. In other words, there are M one-dimensional counters, which are $N\_1, N\_2, N\_3, ... N\_M$, respectively. When counting, after an n-th counter records a period $N\_n$ (such as a period from 0 to $N\_n$), the n-th counter may be zeroed, and an n +1-th counter may add 1. Based on the definition of the M-dimensional counter, the present disclosure proposes to maintain an M-dimensional read counter and a read pointer and maintain an M-dimensional write counter and a write pointer. The M-dimensional read counter may be expressed as $R\_cnt ( i\_1, i\_2, i\_3 ... i\_M)$, and correspondingly, the read pointer may be expressed as $R\_p = R\_addr + i\_1 * s\_0 + i\_2 * s\_1 + .... + s\_{M-1} * n\_M$, where $R\_addr$ is a read base address. During a read process, each time $R\_n0$ elements are read, the M-dimensional counter $R\_cnt$ may add 1. Similarly, the M-dimensional write counter may be expressed as $W\_cnt (i\_1, i\_2, i\_3 ... i\_M)$, and correspondingly, the write pointer may be expressed as $W\_p = W\_addr + i\_1 * s\_0 + i\_2 * s\_1 + .... + s\_{M-1} * n\_M$, where $W\_addr$ is a write base address.

Based on the M-dimensional read counter and the M-dimensional write counter, the solution of the present disclosure may write $R\_n0$ elements into the data caching circuit via the data conversion circuit and then read $W\_n0$ elements from the data caching circuit through the data conversion circuit, so as to implement the data conversion on the to-be-converted data. For example, according to the data conversion instruction, by using the data write and read operations, for the multi-dimensional data, the data conversion circuit may selectively output part of the data, rotate the data at an angle, and mirror or transpose the data.

For example, in an embodiment, according to the descriptor, the data conversion instruction of the present disclosure may further include the write base address information ($W\_addr$) and the read base address information ($R\_addr$). In performing the write and read operations, the data conversion circuit may address the next dimension according to the write base address information and the inter-dimension offset information to perform the write operation; and the data conversion circuit may address the next dimension according to the read base address information and the inter-dimension offset information to perform the read operation. It may be shown that, by using the base address information, the data conversion circuit may more accurately and efficiently locate multi-dimensional data required to be written and read. Further, by introducing the base address information, ways to locate the multi-dimensional data may be increased, and space for addressing may also be extended. Additionally, by introducing the base address information and the inter-dimension offset information, the data processing apparatus of the present disclosure may implement various operations on the multi-dimensional data based on the data conversion instruction. The operations may be one or more operations selected from a bypass operation, a multi-angle rotation operation, a mirroring operation, or a sequential conversion operation of the multi-dimensional data.

In an exemplary implementation scenario, when the multi-dimensional data is implemented as a two-dimensional matrix, the data caching circuit of the present disclosure may include a caching storage array. In an embodiment, a size of the caching storage array may be determined according to the number of rows X of a to-be-converted matrix, the number of columns Y of the to-be-converted matrix, and storage space K occupied by basic elements in the matrix.

Specifically, according to the number of rows X of the to-be-converted matrix, the number of columns Y of the to-be-converted matrix, and the storage space K occupied by the basic elements, the data processing apparatus of the present disclosure may also be configured with one caching storage array matching the size of the to-be-converted matrix. Storage space occupied by basic elements of the caching storage array is greater than or equal to K. The number of rows of the caching storage array is greater than or equal to the greater of X and Y. The number of columns of the caching storage array is greater than or equal to the greater of X and Y. The above setting of the size of the caching storage array is to satisfy that the to-be-converted matrix may be written into the caching storage array according to a preset access method. For example, when X is not equal to Y, the number of rows and the number columns are exchanged under a transposition operation, and the number of rows and the number of columns of the caching storage array formed according to the above setting may support such changes in the number of rows and the number of columns during a matrix conversion process. Of course, when X is equal to Y, as long as the number of rows of the caching storage array is greater than or equal to any one of X and Y and the number of columns of the caching storage array is greater than or equal to any one of X and Y, the above operations may be implemented.

Based on the caching storage array, a shape of the to-be-converted matrix (the two-dimensional data) may be described as (X, Y) by the descriptor of the present disclosure. In other words, through two parameters, the multi-dimensional data is represented as the two-dimensional data. Moreover, a size of a first dimension (column) of the multi-dimensional data is Y, and a size of a second dimension (row) of the multi-dimensional data is X. By using the descriptor, the data conversion circuit of the present disclosure may perform corresponding write and read operations on a two-dimensional matrix in different scenarios. As such, various operations on the two-dimensional matrix may be implemented. The operations include a transposition operation, a 270-degree rotation operation, a 90-degree rotation operation, a 180-degree rotation operation, and a mirroring operation.

Taking the transposition operation as an example, it is assumed that the to-be-converted matrix is an X*Y matrix, where X may be equal to Y or may not be equal to Y. The data conversion circuit may store a first row of the X*Y matrix in an order from a first basic element to a Y-th basic element to positions from a first basic element position to a Y-th basic element position in a first row of the caching storage array, respectively. The data conversion circuit repeats such operations in an order from a first row to an X-th row of the X*Y matrix until the X-th row of the X*Y matrix is stored in the order from the first basic element to the Y-th basic element to positions from a first basic element position to a Y-th basic element position in an X-th row of the caching storage array, respectively. As such, an (X*Y) intermediate matrix is formed. This intermediate matrix may be understood as copying the to-be-converted matrix to the caching storage array. Then, the data conversion circuit reads first basic elements from the first row to the X-th row of the (X*Y) intermediate matrix in order. Moreover, the data conversion circuit concatenates X read basic elements into one row in order and uses this row as a first row of the transposed matrix. The data conversion circuit repeats such operations in the order from the first basic element to the Y-th basic element until Y-th basic elements from the first row to the X-th row of the (X*Y) intermediate matrix are read in the order. Moreover, X read basic elements are concatenated into one row in order and used as a Y-th row of the transposed matrix. As such, the transposed matrix is formed.

Taking the 270-degree rotation operation as an example, it is still assumed that the to-be-converted matrix is an X*Y matrix, where X may be equal to Y or may not be equal to Y. The data conversion circuit may store a first row of the X*Y matrix in an order from a Y-th basic element to a first basic element to positions from a first basic element position to a Y-th basic element position in a first row of the caching storage array, respectively. The data conversion circuit repeats such operations in an order from a first row to an X-th row of the X*Y matrix until the X-th row of the X*Y matrix is stored in the order from the Y-th basic element to the first basic element to positions from a first basic element position to a Y-th basic element position in an X-th row of the caching storage array, respectively. As such, an X*Y intermediate matrix is formed. This intermediate matrix may be understood as being formed by in-row mirroring of each row of the to-be-converted matrix. Then, the data conversion circuit may read first basic elements from the first row to the X-th row of the X*Y intermediate matrix in order. Moreover, the data conversion circuit concatenates X read basic elements into one row in order and uses this row as a first row of the rotated matrix. The data conversion circuit repeats such operations in an order from the first basic element to the Y-th basic element until Y-th basic elements from the first row to the X-th row of the X*Y intermediate matrix are read in the order. Moreover, X read basic elements are concatenated into one row in order and used as a Y-th row of the rotated matrix. As such, the 270-degree rotated matrix is formed.

Taking the mirroring operation as an example, it is still assumed that the to-be-converted matrix is an X*Y matrix, where X may be equal to Y or may not be equal to Y. The data conversion circuit may store a first row of the X*Y matrix in an order from a Y-th basic element to a first basic element to positions from a first basic element position to a Y-th basic element position in a first row of the caching storage array, respectively. The data conversion circuit repeats such operations in an order from a first row to an X-th row of the X*Y matrix until the X-th row of the X*Y matrix is stored in the order from the Y-th basic element to the first basic element to positions from a first basic element position to a Y-th basic element position in an X-th row of the caching storage array, respectively. As such, an X*Y intermediate matrix is formed. This intermediate matrix may be understood as being formed by in-row mirroring of each row of the to-be-converted matrix. Then, the data conversion circuit may read the X-th row of the X*Y intermediate matrix in the order from the Y-th basic element to the first basic element and use this row as a first row of the mirrored matrix. The data conversion circuit repeats such operations in an order from the X-th row to the first row of the intermediate matrix until the first row of the X*Y intermediate matrix is read in the order from the Y-th basic element to the first basic element and used as an X-th row of the mirrored matrix. As such, the mirrored matrix is formed.

The data processing apparatus of the present disclosure is further described in combination with FIG. 1 above. Based on the above description, those skilled in the art may understand that the data processing apparatus of the present disclosure uses the data conversion instruction to convert the multi-dimensional data, which improves execution efficiency of a multi-dimensional data conversion. Additionally, by using the data conversion circuit to perform various different write and read operations on the multi-dimensional data to convert the data, the solution of the present disclosure simplifies the complexity of a multi-dimensional data conversion operation and speeds up the progress of the multi-dimensional data conversion. Therefore, the solution of the present disclosure also reduces overheads of data processing. Moreover, in a computing scenario that requires a data conversion, the solution of the present disclosure improves computing efficiency and reduces computing overheads.

FIG. 10 is a schematic diagram of data storage space used for multi-dimensional data according to an embodiment of the present disclosure. As described above, the data conversion operation of the present disclosure may further include using the descriptor to indicate (or acquire) information about the shape of the multi-dimensional data to determine the storage address of the multi-dimensional data, thereby acquiring and saving the multi-dimensional data through the storage address. Additionally, based on the above description, those skilled in the art may also understand that the multi-dimensional data of the present disclosure may refer to or represent tensor data with two or more dimensions. Therefore, the following description of the multi-dimensional data is also applicable to the tensor data with two or more dimensions.

In an exemplary implementation, the descriptor may be used to indicate a shape of N-dimensional data, where N is a positive integer greater than or equal to 2, and for example, N=2 or 3. The multi-dimensional data may include multiple forms of data composition. For example, a matrix may be viewed as multi-dimensional data with two or more dimensions, while data with "HWC" dimensions may be viewed as multi-dimensional data with three dimensions. The shape of the multi-dimensional data includes information such as dimensions of the multi-dimensional data and a size of each dimension of the multi-dimensional data. For example, for the multi-dimensional data:

$$\begin{bmatrix} 1 & 2 & 3 & 4 \\ 11 & 22 & 33 & 44 \end{bmatrix}.$$

The shape of the multi-dimensional data may be described as (2, 4) by the descriptor. In other words, through two parameters, the multi-dimensional data is represented as two-dimensional data. Moreover, a size of a first dimension (column) of the multi-dimensional data is 2, and a size of a second dimension (row) of the multi-dimensional data is 4. It is required to be explained that the present disclosure does not limit how the descriptor indicates the shape of the multi-dimensional data.

In an exemplary implementation, a value of N may be determined either according to the number of dimensions (the number of ranks) of the multi-dimensional data or according to the usage requirements of the multi-dimensional data. For example, when the value of N is 3, the multi-dimensional data is three-dimensional data, and thereby, the descriptor may be used to indicate shapes (such as offsets, sizes, and the like) of the three-dimensional data in three dimensional directions. It should be understood that those skilled in the art may set the value of N according to actual requirements, which is not limited in the present disclosure.

In an exemplary implementation, the descriptor may include identification of the descriptor and/or content of the descriptor. In this situation, the identification of the descriptor may be used to distinguish the descriptor. For example, the identification of the descriptor may be the serial number of the descriptor. The content of the descriptor may include at least one shape parameter representing the shape of the multi-dimensional data. For example, when the multi-dimensional data is the three-dimensional data, in the three dimensions of the multi-dimensional data, shape parameters of two dimensions thereof may be fixed, and the content of the descriptor of the multi-dimensional data may include a shape parameter of another dimension representing the multi-dimensional data.

In an exemplary implementation, the identification of the descriptor and/or the content of the descriptor may be stored in descriptor storage space (an internal memory), such as a register, an on-chip SRAM (static random access memory), or other medium cache. Correspondingly, the multi-dimensional data indicated by the descriptor may be stored in data storage space (the internal memory or an external memory), such as an on-chip cache or an off-chip memory. In view of this, the present disclosure does not limit specific positions of the descriptor storage space and the data storage space.

In an exemplary implementation, the identification of the descriptor, the content of the descriptor, and the multi-dimensional data indicated by the descriptor may be stored in a same area of the internal memory. For example, a contiguous area of the on-chip cache may be used to store related content of the descriptor, and the address of the contiguous area may be, for example, ADDR0-ADDR1023. In this address, ADDR0-ADDR63 may be used as the descriptor storage space to store the identification of the descriptor and the content of the descriptor, and ADDR64-ADDR1023 may be used as the data storage space to store the multi-dimensional data indicated by the descriptor. In the descriptor storage space, ADDR0-ADDR31 may be used to store the identification of the descriptor, and ADDR32-ADDR63 may be used to store the content of the descriptor. It should be understood that ADDR is not limited to having one bit or one byte, and here, ADDR is used to represent one address, which is an address unit. Those skilled in the art may determine the descriptor storage space, the data storage space, and specific addresses of the descriptor storage space and the data storage space according to actual situations. The present disclosure does not limit this.

In an exemplary implementation, the identification of the descriptor, the content of the descriptor, and the multi-dimensional data indicated by the descriptor may be stored in different areas of the internal memory. For example, the register may be used as the descriptor storage space, and the identification of the descriptor and the content of the descriptor are stored in the register. The on-chip cache may be used as the data storage space to store the multi-dimensional data indicated by the descriptor.

In an exemplary implementation, when the register is used to store the identification of the descriptor and the content of the descriptor, the serial number of the register may be used to represent the identification of the descriptor. For example, when the serial number of the register is 0, the identification of the descriptor stored in the register may be set as 0. When the descriptor in the register is valid, an area of cache space may be allocated to store the multi-dimensional data according to a size of the multi-dimensional data indicated by the descriptor.

In an exemplary implementation, the identification of the descriptor and the content of the descriptor may be stored in the internal memory, and the multi-dimensional data indicated by the descriptor may be stored in the external memory. For example, a way of storing the identification of the descriptor and the content of the descriptor on the chip and storing the multi-dimensional data indicated by the descriptor off the chip may be adopted.

In an exemplary implementation, a data address of data storage space corresponding to each descriptor may be a fixed address. For example, separate data storage space may be allocated for the multi-dimensional data, and a starting address of each piece of multi-dimensional data in the data storage space corresponds to the descriptor one by one. In this situation, the data conversion circuit of the present disclosure may determine a data address of data corresponding to an operand in the data storage space according to the descriptor.

In an exemplary implementation, when the data address of the data storage space corresponding to the descriptor is a variable address, the descriptor may be further used to indicate an address of the multi-dimensional data. In this situation, the content of the descriptor may further include at least one address parameter representing the address of the multi-dimensional data. For example, when the multi-dimensional data is the three-dimensional data, and the descriptor points to the address of the multi-dimensional data, the content of the descriptor may include one address parameter representing the address of the multi-dimensional data, such as a starting physical address of the multi-dimensional data. Moreover, the content of the descriptor may include a plurality of address parameters representing the address of the multi-dimensional data, such as starting address + address offset of the multi-dimensional data or the address parameter of the multi-dimensional data based on each dimension. Those skilled in the art may set the address parameter according to actual requirements. The present disclosure does not limit this.

In an exemplary implementation, the address parameter of the multi-dimensional data may include a base address of a data datum point of the descriptor in the data storage space of the multi-dimensional data. The base address may vary according to the change of the data datum point. The present disclosure does not limit the selection of the data datum point.

In an exemplary implementation, the base address may include a starting address of the data storage space. When the data datum point of the descriptor is a first data block of the data storage space, the base address of the descriptor is the starting address of the data storage space. When the data datum point of the descriptor is other data block other than the first data block in the data storage space, the base address of the descriptor is an address of this data block in the data storage space.

In an exemplary implementation, the shape parameter of the multi-dimensional data includes at least one of followings: a size of the data storage space in at least one of N dimensional directions, a size of a storage area in at least one of N dimensional directions, an offset of the storage area in at least one of N dimensional directions, positions of at least two vertices at diagonal positions of N dimensional directions relative to the data datum point, and a mapping relationship between a data description position of the multi-dimensional data indicated by the descriptor and a data address of the multi-dimensional data indicated by the descriptor. The data description position is a mapping position of a point or an area in the multi-dimensional data indicated by the descriptor. For example, when the multi-dimensional data is the three-dimensional data, the descriptor may use a three-dimensional space coordinate (x, y, z) to represent the shape of the multi-dimensional data. The data description position of the multi-dimensional data may be a position of a point or an area mapped by the multi-dimensional data in three-dimensional space that is represented by the three-dimensional space coordinate (x, y, z).

It should be understood that those skilled in the art may select the shape parameter representing the multi-dimensional data according to actual situations. The present disclosure does not limit this. By using the descriptor during a data access process, associations between data may be established, thereby reducing complexity of data access and improving instruction processing efficiency.

In an exemplary implementation, the content of the descriptor of the multi-dimensional data may be determined according to the base address of the data datum point of the descriptor in the data storage space of the multi-dimensional data, the size of the data storage space in at least one of N dimensional directions, the size of the storage area in at least one of N dimensional directions, and/or the offset of the storage area in at least one of N dimensional directions.

As shown in FIG. 10, data storage space 1-21 adopts a row-first manner to store one piece of two-dimensional data, which may be represented by (x, y) (where X axis represents a horizontal right direction, and Y axis represents a vertical down direction). A size (a size of each row) of the data storage space 1-21 along the X axis is ori_x (which is not shown in the figure). A size (the total number of rows) of the data storage space 1-21 along the Y axis is ori_y (which is not shown in the figure). A starting address PA_start (a base address) of the data storage space 1-21 is a physical address of a first data block 1-22. A data block 1-23 is part of the data in the data storage space 1-21. An offset 1-25 of the data block 1-23 along the X axis is represented as offset_x. An offset 1-24 of the data block 1-23 along the Y axis is represented as offset_y. A size of the data block 1-23 along the X axis is represented as size_x. A size of the data block 1-23 along the Y axis is represented as size_y.

In an exemplary implementation, when the descriptor is used to define the data block 1-23, the data datum point of the descriptor may use the first data block of the data storage space 1-21, and the base address of the descriptor may be agreed as the starting address PA_start of the data storage space 1-21. Then, in combination with the size ori_x of the data storage space 1-21 along the X axis, the size ori_y of the data storage space 1-21 along the Y axis, the offset offset_y of the data block 1-23 along the Y axis, the offset offset_x of the data block 1-23 along the X axis, the size size_x of the data block 1-23 along the X axis, and the size size_y of the data block 1-23 along the Y axis, the content of the descriptor of the data block 1-23 may be determined.

In an exemplary implementation, the following formula (1) may be used to represent the content of the descriptor.

$$\begin{cases} X \text{ direction: } ori\_x, offset\_x, size\_x \\ Y \text{ direction: } ori\_y, offset\_y, size\_y \end{cases} \quad (1).$$

It should be understood that, although in the above embodiment, the content of the descriptor represents two-dimensional space, those skilled in the art may set specific dimensions represented by the content of the descriptor according to actual situations, which is not limited in the present disclosure.

In an exemplary implementation, the base address of the data datum point of the descriptor in the data storage space may be agreed. Based on the base address, according to positions of at least two vertices at diagonal positions of N dimensional directions relative to the data datum point, the content of the descriptor of the multi-dimensional data may be determined.

For example, the base address PA_base of the data datum point of the descriptor in the data storage space may be agreed. For example, in the data storage space 1-21, a piece of data (such as a piece of data whose position is (2, 2)) may be selected as the data datum point, and a physical address of the data in the data storage space may be used as the base address PA_base. Next, according to positions of two vertices at diagonal positions relative to the data datum point, the content of the descriptor of the data block 1-23 in FIG. 10 may be determined. First, positions of at least two vertices at diagonal positions of the data block 1-23 relative to the data datum point may be determined. For example, positions of vertices at diagonal positions from top left to bottom right relative to the data datum point may be used. A relative position of a vertex in the top left is (x_min, y_min), and a relative position of a vertex in the bottom right is (x_max, y_max). Then, according to the base address PA_base, the relative position (x_min, y_min) of the vertex in the top left, and the relative position (x_max, y_max) of the vertex in the bottom right, the content of the descriptor of the data block 1-23 may be determined.

In an exemplary implementation, the following formula (2) may be used to represent the content of the descriptor (where the base address is PA_base).

$$\begin{cases} \text{X direction：} \quad \text{x\_min, x\_max} \\ \text{Y direction：} \quad \text{y\_min, y\_max} \end{cases} \tag{2}.$$

It should be understood that, although in the above embodiment, vertices at two diagonal positions including the top left and the bottom right are used to determine the content of the descriptor, those skilled in the art may set specific vertices for at least two vertices at diagonal positions according to actual requirements, which is not limited in the present disclosure.

In an exemplary implementation, according to the base address of the data datum point of the descriptor in the data storage space and the mapping relationship between the data description position of the multi-dimensional data indicated by the descriptor and the data address of the multi-dimensional data indicated by the descriptor, the content of the descriptor of the multi-dimensional data may be determined. The mapping relationship between the data description position and the data address may be set according to actual requirements. For example, when the multi-dimensional data indicated by the descriptor is three-dimensional spatial data, a function f(x, y, z) may be used to define the mapping relationship between the data description position and the data address.

In an exemplary implementation, the following formula (3) may be used to represent the content of the descriptor.

$$\begin{cases} f(x,\ y,\ z) \\ \text{PA\_base} \end{cases} \tag{3}.$$

In an exemplary implementation, the descriptor may be further used to indicate the address of the multi-dimensional data, where the content of the descriptor may further include at least one address parameter representing the address of the multi-dimensional data. For example, the content of the descriptor may be:

$$\text{D：} \begin{cases} \text{X direction：} \quad \text{ori\_x, offset\_x, size\_x} \\ \text{Y direction：} \quad \text{ori\_y, offset\_y, size\_y} \\ \qquad\qquad \text{PA} \end{cases}$$

PA is the address parameter. The address parameter may be either a logical address or a physical address. A descriptor parsing circuit may obtain a corresponding data address by taking PA as any one of a vertex, an intermediate point, or a preset point of a vector shape and combining shape parameters along X direction and along Y direction.

In an exemplary implementation, the address parameter of the multi-dimensional data includes the base address of the data datum point of the descriptor in the data storage space of the multi-dimensional data, and the base address includes the starting address of the data storage space.

In a possible implementation, the descriptor may further include at least one address parameter representing the address of the multi-dimensional data. For example, the content of the descriptor may be:

$$\text{D：} \begin{cases} \text{X direction：} \quad \text{ori\_x, offset\_x, size\_x} \\ \text{Y direction：} \quad \text{ori\_y, offset\_y, size\_y} \\ \qquad\qquad \text{PA\_start} \end{cases}$$

PA_start is a base address parameter, which will not be repeated herein.

It should be understood that those skilled in the art may set the mapping relationship between the data description position and the data address according to actual situations, which is not limited in the present disclosure.

In an exemplary implementation, an agreed base address may be set in a task. Descriptors of instructions in the task use this base address. The content of the descriptor may include a shape parameter based on this base address.

Through a way of setting environment parameters of this task, this base address may be determined. For related descriptions and usage methods of the base address, reference may be made to the above embodiment. In this implementation, the content of the descriptor may be mapped as the data address more quickly.

In an exemplary implementation, the base address may be included in the content of each descriptor, and the base address of each descriptor may be different. Compared with a way of using the environment parameters to set a common base address, each descriptor in this way may describe data more flexibly and use larger data address space.

In an exemplary implementation, according to the content of the descriptor, data addresses of data corresponding to operands of a processing instruction in the data storage space may be determined. Computing of the data addresses may be completed by hardware automatically. Moreover, when the content of the descriptor is represented in different ways, computing methods of the data addresses may also be different. The present disclosure does not limit specific computing methods of the data addresses.

For example, the content of the descriptor in the operands is represented by the formula (1). Offsets of the multi-dimensional data indicated by the descriptor in the data storage space are offset_x and offset_y respectively, and a size of the multi-dimensional data indicated by the descriptor in the data storage space is size_x*size_y. Then, a starting data address $PA1_{(x,y)}$ of the multi-dimensional data indicated by the descriptor in the data storage space may be determined by using the following formula (4):

$$PA1_{(x,y)} = PA\_start + (offset\_y - 1) * ori\_x + offset\_x \qquad (4).$$

According to the starting data address $PA1_{(x,y)}$ determined by the formula (4) above, in combination with the offsets including offset_x and offset_y and the sizes of the storage area including size_x, and size_y, a storage area of the multi-dimensional data indicated by the descriptor in the data storage space may be determined.

In an exemplary implementation, when the operands further include a data description position for the descriptor, according to the content of the descriptor and the data description position, the data addresses of the data corresponding to the operands in the data storage space may be determined. In this way, part of the data (such as one or a plurality of pieces of data) of the multi-dimensional data indicated by the descriptor may be processed.

For example, the content of the descriptor in the operands is represented by the formula (1). The offsets of the multi-dimensional data indicated by the descriptor in the data storage space are offset_x and offset_y respectively, and the size of the multi-dimensional data indicated by the descriptor in the data storage space is size_x*size_y. The data description position for the descriptor included in the operands is $(x_q, y_q)$. Then, the data address $PA2_{(x,y)}$ of the multi-dimensional data indicated by the descriptor in the data storage space may be determined by using the following formula (5):

$$PA2_{(x,y)} = PA\_start + \left(offset\_y + y_q - 1\right) * ori\_x + \left(offset\_x + x_q\right) \qquad (5).$$

According to the starting data address $PA2_{(x,y)}$ determined by the formula (5) above, in combination with the offsets including offset_x and offset_y and the sizes of the storage area including size_x, and size_y, the storage area of the multi-dimensional data indicated by the descriptor in the data storage space may be determined.

In an exemplary implementation, when the operands further include the data description position for the descriptor, according to the content of the descriptor and the data description position, the data addresses of the data corresponding to the operands in the data storage space may be determined. In this way, part of the data (such as one or a plurality of pieces of data) of the multi-dimensional data indicated by the descriptor may be processed.

For example, the content of the descriptor in the operands is represented by the formula (2). The offsets of the multi-dimensional data indicated by the descriptor in the data storage space are offset_x and offset_y respectively, and the size of the multi-dimensional data indicated by the descriptor in the data storage space is size_x*size_y. The data description position for the descriptor included in the operands is $(x_q, y_q)$. Then, the data address $PA2_{(x,y)}$ of the multi-dimensional data indicated by the descriptor in the data storage space may be determined by using the following formula (6):

$$PA2_{(x,y)} = PA\_start + \left(offset\_y + y_q - 1\right) * ori\_x + \left(offset\_x + x_q\right) \qquad (6).$$

The data processing apparatus of the present disclosure is further described in combination with FIG. 1 and FIG. 10 above. Through the data conversion instruction and in combination with the descriptor, the data processing apparatus of the present disclosure may improve efficiency of accessing and converting the multi-dimensional data significantly and reduce overheads for multi-dimensional data processing.

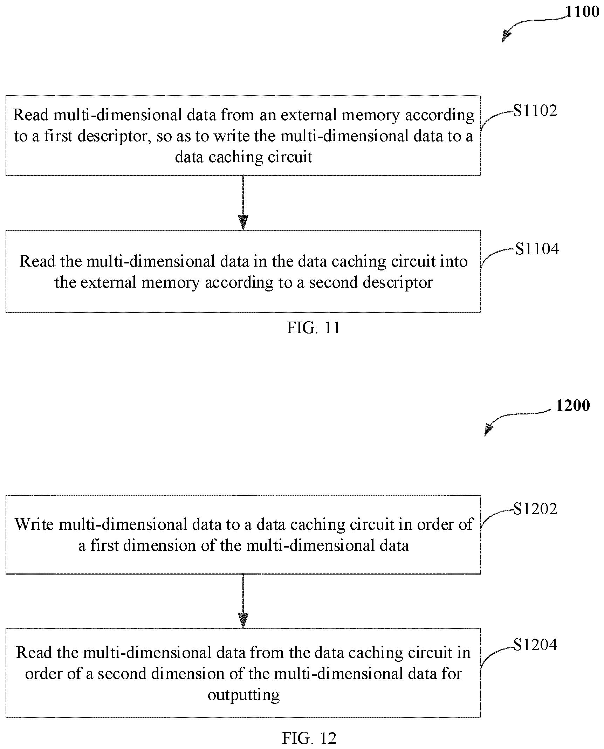

FIGs. 11-13 respectively show flowcharts of various operations of a data conversion circuit according to embodiments of the present disclosure.

In order to perform an operation 1100 shown in FIG. 11, the data processing apparatus of the present disclosure may further include an external memory (such as a storage circuit 202 illustratively shown in FIG. 2) storing multi-dimensional data. Based on this external memory, a data conversion instruction of the present disclosure may include a first descriptor and a second descriptor. In this scenario, in a step S1102, the data conversion circuit of the present disclosure may be configured to read the multi-dimensional data from the external memory according to the first descriptor, so as to write the multi-dimensional data to a data caching circuit. Next, in a step S1104, the data conversion circuit of the present disclosure may be configured to read the multi-dimensional data in the data caching circuit into the external memory according to the second descriptor. Through different write and read operations for the data caching circuit, the solution of the present disclosure may implement a conversion on the multi-dimensional data by using the descriptor. For example, the data conversion circuit of the present disclosure may perform deformation operations in whole or in blocks on the multi-dimensional data according to the first descriptor and then output multi-dimensional data represented by the second descriptor. According to different conversion scenarios, the deformation operations include but are not limited to a mirroring operation, a 180-degree rotation operation, a 270-degree rotation operation, a 90-degree rotation operation, or a transposition operation on the multi-dimensional data.

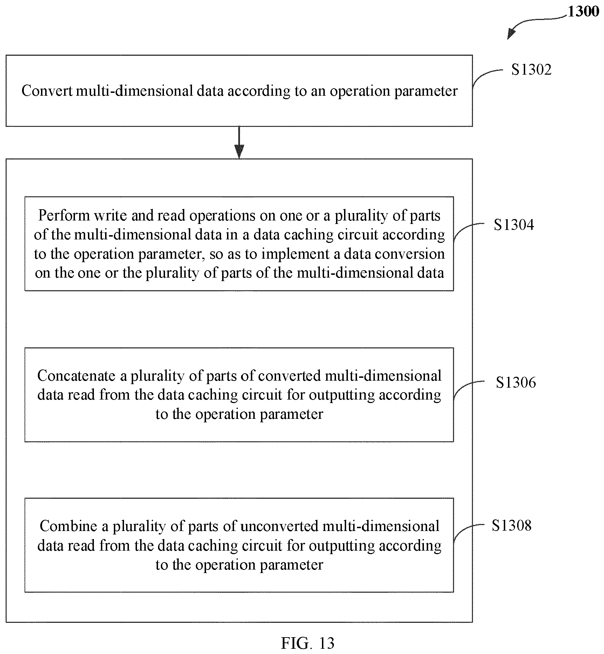

In one or a plurality of embodiments, when the data conversion instruction includes an operation parameter, the data conversion circuit of the present disclosure may be configured to convert the multi-dimensional data according to the operation parameter. A data conversion operation 1200 and a data conversion operation 1300 performed by the data conversion circuit of the present disclosure according to the operation parameter will be described in combination with FIG. 12 and FIG. 13 below.

As shown in FIG. 12, when the data conversion circuit is configured to perform an operation according to the operation parameter, in a step S1202, the data conversion circuit may write the multi-dimensional data to the data caching circuit in order of a first dimension of the multi-dimensional data. Next, in a step S1204, the data conversion circuit of the present disclosure may be configured to read the multi-dimensional data from the data caching circuit in order of a second dimension of the multi-dimensional data for outputting. For example, for three-dimensional data in order of HWC (H represents height, W represents width, and C represents channel) dimensions in a neural network, by performing the operation 1200 according to the operation parameter, the three-dimensional data may be converted into three-dimensional data in order of WCH or CWH dimensions, thereby implementing a conversion on the three-dimensional data.

As shown in FIG. 13, in a step S1302, the data conversion circuit may be configured to convert the multi-dimensional data according to the operation parameter. For example, the data conversion circuit may perform various operations shown in steps S1304-S1308 according to different operation parameters.

Specifically, as shown in a step S1304, according to the operation parameter, the data conversion circuit of the present disclosure may be configured to perform write and read operations on one or a plurality of parts of the multi-dimensional data in the data caching circuit, so as to implement a data conversion on the one or the plurality of parts of the multi-dimensional data. In other words, according to the indication of the operation parameter, the data conversion circuit of the present disclosure may selectively perform write and read operations on a plurality of parts of the multi-dimensional data instead of processing the entire multi-dimensional data.

As shown in a step S1306, according to the operation parameter, the data conversion circuit of the present disclosure may be configured to concatenate a plurality of parts of converted multi-dimensional data read from the data caching circuit for outputting. In other words, in addition to performing the conversion by accessing the multi-dimensional data in the data caching circuit, the data conversion circuit of the present disclosure may further perform related post-processing operations on the converted multi-dimensional data, so as to facilitate subsequent processing. Specifically, according to the operation parameter, the data conversion circuit may pick out a plurality of parts (such as parts corresponding to one or a plurality of dimensions) of specified multi-dimensional data. Moreover, the data conversion circuit may perform placement (including ordered concatenation) on the plurality of parts according to requirements of subsequent operations, so as to enable the plurality of parts to be used for subsequent processing. In an exemplary implementation scenario, the subsequent processing may be performed, for example, by a computing circuit 204 in FIG. 2.

Slightly different from the operation of the above step S1306, in the operation shown in the step S1308, according to the operation parameter, the data conversion circuit of the present disclosure may be configured to combine a plurality of parts of unconverted multi-dimensional data read from the data caching circuit for outputting. It may be shown that, in this situation, the data conversion circuit of the present disclosure does not convert the multi-dimensional data through the write and read operations in the data caching circuit. On the contrary, before outputting the multi-dimensional data to a subsequent processing unit (such as a computing circuit 204 in FIG. 2), the data conversion circuit of the present disclosure performs a combination operation on the unconverted multi-dimensional data. In other words, the data conversion circuit of the present disclosure may support an invocation function and a prohibition function in terms of the data conversion operation. Moreover, the data conversion circuit of the present disclosure selects the function according to the operation parameter. When the data conversion circuit of the present disclosure chooses to disable this data conversion function according to the operation parameter, the data conversion circuit of the present disclosure also supports selective non-conversion of the entire multi-dimensional data. Instead, the data conversion circuit of the present disclosure picks out and combines a plurality of parts (which may be specified by the operation parameter) of the multi-dimensional data for subsequent processing.

The computing apparatus (such as the computing apparatus 200 in FIG. 2) of the present disclosure may include the data processing apparatus further described in combination with FIG. 1 above. In other words, the computing apparatus of the present disclosure may include the data caching circuit 102 and the data conversion circuit 104 shown in FIG. 1. Since the data processing apparatus of the present disclosure is described in detail in combination with FIGs. 10-13 above, and specific descriptions about the data caching circuit and the data conversion circuit are also applicable to the computing apparatus, the same content will not be repeated herein.

As shown in FIG. 2, the computing apparatus of the present disclosure further includes a storage circuit and a computing circuit. According to different application scenarios, here, the computing circuit and the storage circuit may be implemented in different ways. When the computing apparatus of the present disclosure is applied in the field of artificial intelligence, operation data or to-be-exchanged data may be data in various related fields. For example, the data may be various training data in machine learning, network model data and parameters, and various types of to-be-detected data (such as three-dimensional or four-dimensional image data, and the like).

In an embodiment, the computing circuit may take the form of a general or dedicated processor and a general or dedicated processor core. The computing circuit may include various types of operators and various types of buses (such as a data bus, a control bus, or a broadcast bus). When the solution of the present disclosure is applied in the field of artificial intelligence, the computing circuit may be implemented or included in a single-core or multi-core deep learning processor, so as to implement various types of computing operations for the multi-dimensional data. In an application scenario, when the computing circuit is implemented as the processor core, the computing circuit may be packaged with the data caching circuit and the data conversion circuit together, so as to form the processor. In this situation, the data caching circuit may be implemented as the cache of the computing apparatus, so as to save data (including the multi-dimensional data) and instructions that are most frequently accessed by the computing circuit in an internal memory (such as the storage circuit 202). As such, the computing circuit may not be required to read required data and required instructions from an internal memory that runs relatively slowly.

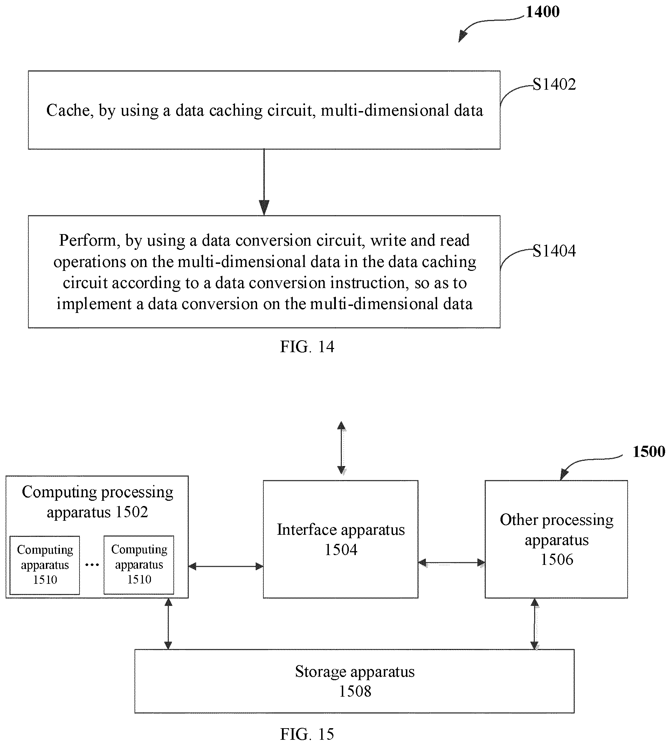

FIG. 14 shows a flowchart of an implementation method 1400 for a data processing apparatus according to an embodiment of the present disclosure. It may be understood that here, the data processing apparatus is the data processing apparatus discussed in combination with FIGs. 1-13 above. Therefore, the above description of the data processing apparatus is also applicable to the solution shown in FIG. 14, and the same will not be repeated herein.

As shown in FIG. 14, in a step S1402, the method 1400 uses a data caching circuit to cache multi-dimensional data. According to different embodiments of the present disclosure, here, the data may be the multi-dimensional data, such as a two-dimensional matrix or a three-dimensional or a four-dimensional array. In a step S1404, the method 1400 uses a data conversion circuit to perform write and read operations on the multi-dimensional data in the data caching circuit according to a data conversion instruction, so as to implement a data conversion on the multi-dimensional data. As described earlier, in an embodiment, the data conversion instruction may include a descriptor used for indicating a shape of the multi-dimensional data. Moreover, the descriptor is used to determine a storage address corresponding to the multi-dimensional data. In another embodiment, the method 1400 includes using the data conversion circuit to perform the write and read operations on the multi-dimensional data according to the storage address. Although the above is not shown in FIG. 14, those skilled in the art may understand that the method 1400 may perform various operations of the data processing apparatus described in combination with FIGs. 10-13.

FIG. 15 shows a structural diagram of a combined processing apparatus 1500 according to an embodiment of the present disclosure. As shown in FIG. 15, the combined processing apparatus 1500 includes a computing processing apparatus 1502, an interface apparatus 1504, other processing apparatus 1506, and a storage apparatus 1508. According to different application scenarios, the computing processing apparatus may include one or a plurality of computing apparatuses 1510. The computing apparatus may include the data processing apparatus of the present disclosure and may be configured to perform operations of the present disclosure described in combination with FIGs. 1-14 above.

In different embodiments, the computing processing apparatus of the present disclosure may be configured to perform an operation specified by a user. In an exemplary application, the computing processing apparatus may be implemented as a single-core artificial intelligence processor or a multi-core artificial intelligence processor. Similarly, the one or the plurality of computing apparatuses included in the computing processing apparatus may be implemented as an artificial intelligence processor core or a partial hardware structure of the artificial intelligence processor core. When the plurality of computing apparatuses are implemented as artificial intelligence processor cores or partial hardware structures of the artificial intelligence processor cores, the computing processing apparatus of the present disclosure may be viewed as having a single-core structure or an isomorphic multi-core structure.

In an exemplary operation, the computing processing apparatus of the present disclosure may interact with other processing apparatus through the interface apparatus, so as to jointly complete the operation specified by the user. According to different implementations, other processing apparatus of the present disclosure may include one or a plurality of types of general and/or dedicated processors, including a CPU (central processing unit), a GPU (graphics processing unit), an artificial intelligence processor, and the like. These processors include but are not limited to a DSP (digital signal processor), an ASIC (application specific integrated circuit), an FPGA (field-programmable gate array), or other programmable logic components, discrete gate or transistor logic components, discrete hardware components, and the like. The number of the processors may be determined according to actual requirements. As described above, with respect to the computing processing apparatus of the present disclosure only, the computing processing apparatus of the present disclosure may be viewed as having the single-core structure or the isomorphic multi-core structure. However, when the computing processing apparatus and other processing apparatus are considered together, both the computing processing apparatus and other processing apparatus may be viewed as forming a heterogeneous multi-core structure.

In one or a plurality of embodiments, other processing apparatus may serve as an interface between the computing processing apparatus of the present disclosure and external data and controls. Other processing apparatus performs basic controls that include but are not limited to moving data, and starting and/or stopping the computing apparatus. In another embodiment, other processing apparatus may also cooperate with the computing processing apparatus to jointly complete an operation task.

In one or a plurality of embodiments, the interface apparatus may be used to transfer data and control instructions between the computing processing apparatus and other processing apparatus. For example, the computing processing apparatus may acquire input data from other processing apparatus via the interface apparatus and write the input data to an on-chip storage apparatus (or called a memory) of the computing processing apparatus. Further, the computing processing apparatus may acquire the control instructions from other processing apparatus via the interface apparatus and write the control instructions to an on-chip control cache of the computing processing apparatus. Alternatively or optionally, the interface apparatus may further read data in the storage apparatus of the computing processing apparatus and then transfer the data to other processing apparatus.

Additionally or optionally, the combined processing apparatus of the present disclosure may further include the storage apparatus. As shown in the figure, the storage apparatus is connected to the computing processing apparatus and other processing apparatus, respectively. In one or a plurality of embodiments, the storage apparatus may be used to save data of the computing processing apparatus and/or other processing apparatus. For example, the data may be data that may not be fully saved in the internal or on-chip storage apparatus of the computing processing apparatus or other processing apparatus.

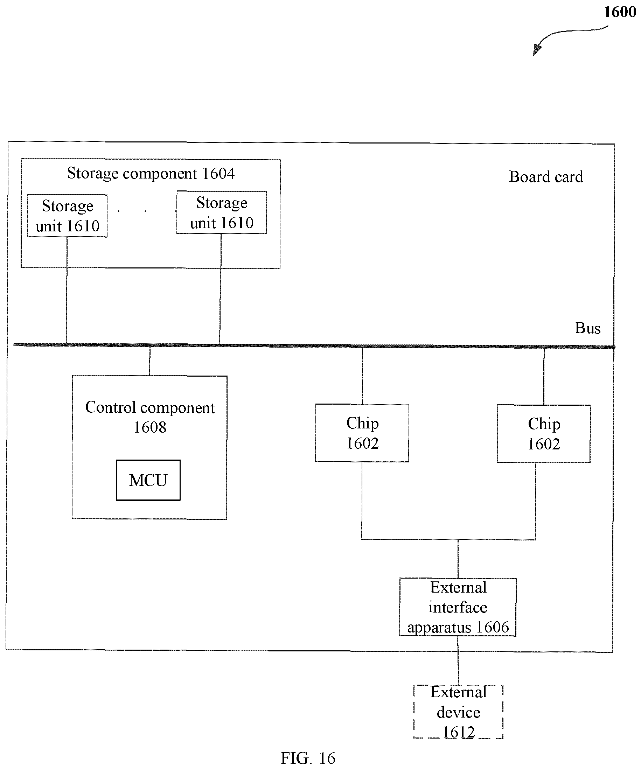

In some embodiments, the present disclosure also discloses a chip (such as a chip 1602 shown in FIG. 16). In an implementation, the chip may be an SoC (system on chip) and may integrate one or a plurality of combined processing apparatuses shown in FIG. 15. The chip may be connected to other related components through an external interface apparatus (such as an external interface apparatus 1606 shown in FIG. 16). The related components may be, for example, a camera, a monitor, a mouse, a keyboard, a network card, or a WI-FI interface. In some application scenarios, the chip may integrate other processing units (such as a video codec) and/or an interface unit (such as a DRAM (dynamic random access memory) interface), and the like. In some embodiments, the present disclosure also discloses a chip package structure, including the chip. In some embodiments, the present disclosure also discloses a board card, including the chip package structure. The board card will be described in detail in combination with FIG. 16 below.

FIG. 16 shows a schematic structural diagram of a board card 1600 according to an embodiment of the present disclosure. As shown in FIG. 16, the board card includes a storage component 1604 used for storing data. The storage component 1604 includes one or a plurality of storage units 1610. The storage component may be connected to and may transfer data to a control component 1608 and the chip 1602 described above through a bus. Further, the board card further includes an external interface apparatus 1606. The external interface apparatus 1606 is configured to implement data relay or transfer between the chip (or the chip in the chip package structure) and an external device 1612 (such as a server or a computer, and the like). For example, to-be-processed data may be transferred from the external device to the chip through the external interface apparatus. For another example, a computing result of the chip may still be sent back to the external device through the external interface apparatus. According to different application scenarios, the external interface apparatus may have different interface forms. For example, the external interface apparatus may adopt a standard PCIe (peripheral component interconnect express) interface.

In one or a plurality of embodiments, the control component in the board card of the present disclosure may be configured to regulate and control a state of the chip. As such, in an application scenario, the control component may include an MCU (micro controller unit), which may be used to regulate and control a working state of the chip.

According to the above descriptions in combination with FIG. 15 and FIG. 16, those skilled in the art may understand that the present disclosure also discloses an electronic device or apparatus. The electronic device or apparatus may include one or a plurality of board cards, one or a plurality of chips, and/or one or a plurality of combined processing apparatuses.

The foregoing may be better understood according to following articles:

Article A1. A data processing apparatus, including a data caching circuit and a data conversion circuit, where

the data caching circuit is configured to perform data caching; and
the data conversion circuit is configured to perform write and read operations on to-be-converted data in the data caching circuit according to a data conversion instruction, so as to implement a data conversion on the to-be-converted data.

Article A2. The data processing apparatus of article A1, where the to-be-converted data is multi-dimensional data, and the data conversion instruction includes data volume information and inter-dimension offset information about performing the write and read operations in each dimension in the multi-dimensional data.

Article A3. The data processing apparatus of article A2, where the data volume information includes the number of data required to be written and read in each dimension, and the inter-dimension offset information includes an address interval required to be spanned from a current dimension to a next dimension.

Article A4. The data processing apparatus of article A3, where the address interval is determined according to the number of data in the current dimension and space occupied by each piece of data.

Article A5. The data processing apparatus of article A3, where, in performing the write and read operations, the data conversion circuit is configured to perform following operations:

according to data volume information of a dimension of the to-be-converted data, performing write and read operations on a corresponding number of data in the dimension in the data caching circuit; and
addressing the next dimension according to the inter-dimension offset information, so as to perform write and read operations on a corresponding number of data in the next dimension in the data caching circuit.

Article A6. The data processing apparatus of article A5, where the data conversion instruction further includes write base address information and read base address information, where, in performing the write and read operations, the data conversion circuit is configured to perform following operations:

addressing the next dimension according to the write base address information and the inter-dimension offset information, so as to perform the write operation; and
addressing the next dimension according to the read base address information and the inter-dimension offset information, so as to perform the read operation.

Article A7. The data processing apparatus of any one of articles A1-A6, where the data conversion includes performing one or more operations selected from a bypass operation, a multi-angle rotation operation, a mirroring operation, or a sequential conversion operation on the multi-dimensional data.

Article A8. The data processing apparatus of article A1, where the to-be-converted data is a to-be-converted matrix, and the data caching circuit includes a caching storage array.

Article A9. The data processing apparatus of article A8, where the data conversion circuit is configured to perform following operations according to the data conversion instruction:

storing each row of the to-be-converted matrix to a corresponding row in the caching storage array in an in-row order, so as to form an intermediate matrix; and
reading each column of the intermediate matrix in an order from a first column to a last column of the intermediate matrix and in an in-column order in the caching storage array and outputting each column as a first row to a last row of the matrix in turn, so as to convert the to-be-converted matrix into a corresponding transposed matrix.

Article A10. The data processing apparatus of article A8, where the data conversion circuit is configured to perform following operations according to the data conversion instruction:

storing each row of the to-be-converted matrix to a corresponding row in the caching storage array in an in-row reverse order, so as to form an intermediate matrix; and
reading each column of the intermediate matrix in an order from a first column to a last column of the intermediate matrix and in an in-column order in the caching storage array and outputting each column as a first row to a last row of the matrix in turn, so as to convert the to-be-converted matrix into a corresponding 270-degree rotated matrix.

Article A11. The data processing apparatus of article A8, where the data conversion circuit is configured to perform following operations according to the data conversion instruction:

storing each row of the to-be-converted matrix to a corresponding row in the caching storage array in an in-row order, so as to form an intermediate matrix; and

reading each column of the intermediate matrix in an order from a first column to a last column of the intermediate matrix and in an in-column reverse order in the caching storage array and outputting each column as a first row to a last row of the matrix in turn, so as to convert the to-be-converted matrix into a corresponding 90-degree rotated matrix.

Article A12. The data processing apparatus of article A8, where the data conversion circuit is configured to perform following operations according to the data conversion instruction:

storing each row of the to-be-converted matrix to a corresponding row in the caching storage array in an in-row reverse order, so as to form an intermediate matrix; and

reading each row of the intermediate matrix in an order from a last row to a first row of the intermediate matrix and in an in-row order in the caching storage array and outputting each row as a first row to a last row of the matrix in turn, so as to convert the to-be-converted matrix into a corresponding 180-degree rotated matrix.

Article A13. The data processing apparatus of article A8, where the data conversion circuit is configured to perform following operations according to the data conversion instruction:

storing each row of the to-be-converted matrix to a corresponding row in the caching storage array in an in-row reverse order, so as to form an intermediate matrix; and

reading each row of the intermediate matrix in an order from a last row to a first row of the intermediate matrix and in the in-row reverse order in the caching storage array and outputting each row as a first row to a last row of the matrix in turn, so as to convert the to-be-converted matrix into a corresponding mirrored matrix.

Article A14. The data processing apparatus of article A1, where

the data caching circuit is configured to cache multi-dimensional data; and
the data conversion circuit is configured to perform write and read operations on the multi-dimensional data in the data caching circuit according to the data conversion instruction, so as to implement a data conversion on the multi-dimensional data, where
the data conversion instruction includes a descriptor used for indicating a shape of the multi-dimensional data, and the descriptor is used to determine a storage address corresponding to the multi-dimensional data, where the data conversion circuit is configured to perform the write and read operations on the multi-dimensional data according to the storage address.

Article A15. The data processing apparatus of article A14, where the data conversion instruction includes identification of the descriptor and/or content of the descriptor, and the content of the descriptor includes at least one shape parameter representing the shape of the multi-dimensional data and at least one address parameter representing an address of the multi-dimensional data.

Article A16. The data processing apparatus of article A15, where the address parameter of the multi-dimensional data includes a base address of a data datum point of the descriptor in data storage space of the multi-dimensional data.

Article A17. The data processing apparatus of article A15, where the shape parameter of the multi-dimensional data includes at least one of followings:

a size of the data storage space in at least one of N dimensional directions, a size of a storage area of the multi-dimensional data in at least one of N dimensional directions, an offset of the storage area in at least one of N dimensional directions, positions of at least two vertices at diagonal positions of N dimensional directions relative to the data datum point, and a mapping relationship between a data description position of the multi-dimensional data indicated by the descriptor and a data address of the multi-dimensional data indicated by the descriptor, where N is an integer greater than or equal to 0.

Article A18. The data processing apparatus of article A15, where the data conversion instruction includes data volume information and/or inter-dimension offset information about performing write and read operations in each dimension in the multi-dimensional data, and the data volume information and/or the inter-dimension offset information are determined according to the address parameter and/or the shape parameter in the descriptor.

Article A19. The data processing apparatus of any one of articles A14-A18, where the data processing apparatus further includes an external memory storing the multi-dimensional data, and the data conversion instruction includes a first descriptor and a second descriptor, where the data conversion circuit is configured to:

read the multi-dimensional data from the external memory according to the first descriptor, so as to write the multi-dimensional data to the data caching circuit; and
read the multi-dimensional data in the data caching circuit into the external memory according to the second descriptor.

Article A20. The data processing apparatus of any one of articles A14-A18, where the data conversion circuit is configured to perform the write and read operations on the multi-dimensional data, so as to perform one of following conversion operations on the multi-dimensional data:
a data mirroring operation, a multi-angle data rotation operation, or a data transposition operation.

Article A21. The data processing apparatus of any one of articles A14-A18, where the data conversion instruction includes an operation parameter, and the data conversion circuit is configured to convert the multi-dimensional data according to the operation parameter.

Article A22. The data processing apparatus of article A21, where the data conversion circuit is configured to:
perform write and read operations on one or a plurality of parts of the multi-dimensional data in the data caching circuit according to the operation parameter, so as to implement a data conversion on the one or the plurality of parts of the multi-dimensional data.

Article A23. The data processing apparatus of article A21, where the data conversion circuit is configured to:
concatenate a plurality of parts of converted multi-dimensional data read from the data caching circuit for outputting according to the operation parameter.

Article A24. The data processing apparatus of article A21, where the data conversion circuit is configured to:
combine a plurality of parts of unconverted multi-dimensional data read from the data caching circuit for outputting according to the operation parameter.

Article A25. The data processing apparatus of article A21, where the data conversion circuit is configured to perform following operations according to the operation parameter:

writing the multi-dimensional data to the data caching circuit in order of a first dimension of the multi-dimensional data; and
reading the multi-dimensional data from the data caching circuit in order of a second dimension of the multi-dimensional data for outputting.

Article A26. An implementation method for a data processing apparatus, where the data processing apparatus includes a data caching circuit and a data conversion circuit, and the method includes:

using the data caching circuit to perform data caching; and
using the data conversion circuit to perform write and read operations on to-be-converted data in the data caching circuit according to a data conversion instruction, so as to implement a data conversion on the to-be-converted data.

Article A27. The method of article A26, where the to-be-converted data is multi-dimensional data, and the data conversion instruction includes data volume information and inter-dimension offset information about performing the write and read operations in each dimension in the multi-dimensional data.

Article A28. The method of article A27, where the data volume information includes the number of data required to be written and read in each dimension, and the inter-dimension offset information includes an address interval required to be spanned from a current dimension to a next dimension.

Article A29. The method of article A28, where the address interval is determined according to the number of data in the current dimension and space occupied by each piece of data.

Article A30. The method of article A28, where, in performing the write and read operations, the method includes using the data conversion circuit to perform following operations:

according to data volume information of a dimension of the to-be-converted data, performing write and read operations on a corresponding number of data in the dimension in the data caching circuit; and
addressing the next dimension according to the inter-dimension offset information, so as to perform write and read operations on a corresponding number of data in the next dimension in the data caching circuit.

Article A31. The method of article A30, where the data conversion instruction further includes write base address information and read base address information, where, in performing the write and read operations, the method includes using the data conversion circuit to perform following operations:

addressing the next dimension according to the write base address information and the inter-dimension offset information, so as to perform the write operation; and
addressing the next dimension according to the read base address information and the inter-dimension offset information, so as to perform the read operation.

Article A32. The method of any one of articles A26-A31, where the data conversion includes performing one or more operations selected from a bypass operation, a multi-angle rotation operation, a mirroring operation, or a sequential conversion operation on the multi-dimensional data.

Article A33. The method of article A26, where the to-be-converted data is a to-be-converted matrix, and the data caching circuit includes a caching storage array.

Article A34. The method of article A33, where the data conversion circuit is used to perform following operations according to the data conversion instruction:

storing each row of the to-be-converted matrix to a corresponding row in the caching storage array in an in-row order, so as to form an intermediate matrix; and
reading each column of the intermediate matrix in an order from a first column to a last column of the intermediate matrix and in an in-column order in the caching storage array and outputting each column as a first row to a last row of the matrix in turn, so as to convert the to-be-converted matrix into a corresponding transposed matrix.

Article A35. The method of article A33, where the data conversion circuit is used to perform following operations according to the data conversion instruction:

storing each row of the to-be-converted matrix to a corresponding row in the caching storage array in an in-row reverse order, so as to form an intermediate matrix; and
reading each column of the intermediate matrix in an order from a first column to a last column of the intermediate matrix and in an in-column order in the caching storage array and outputting each column as a first row to a last row of the matrix in turn, so as to convert the to-be-converted matrix into a corresponding 270-degree rotated matrix.

Article A36. The method of article A33, where the data conversion circuit is used to perform following operations according to the data conversion instruction:

storing each row of the to-be-converted matrix to a corresponding row in the caching storage array in an in-row order, so as to form an intermediate matrix; and
reading each column of the intermediate matrix in an order from a first column to a last column of the intermediate matrix and in an in-column reverse order in the caching storage array and outputting each column as a first row to a last row of the matrix in turn, so as to convert the to-be-converted matrix into a corresponding 90-degree rotated matrix.

Article A37. The method of article A33, where the data conversion circuit is used to perform following operations according to the data conversion instruction:

storing each row of the to-be-converted matrix to a corresponding row in the caching storage array in an in-row reverse order, so as to form an intermediate matrix; and
reading each row of the intermediate matrix in an order from a last row to a first row of the intermediate matrix and in an in-row order in the caching storage array and outputting each row as a first row to a last row of the matrix in turn, so as to convert the to-be-converted matrix into a corresponding 180-degree rotated matrix.

Article A38. The method of article A33, where the data conversion circuit is used to perform following operations according to the data conversion instruction:

storing each row of the to-be-converted matrix to a corresponding row in the caching storage array in an in-row reverse order, so as to form an intermediate matrix; and

reading each row of the intermediate matrix in an order from a last row to a first row of the intermediate matrix and in the in-row reverse order in the caching storage array and outputting each row as a first row to a last row of the matrix in turn, so as to convert the to-be-converted matrix into a corresponding mirrored matrix.

Article A39. The method of article A26, further including:

using the data caching circuit to cache multi-dimensional data; and

using the data conversion circuit to perform write and read operations on the multi-dimensional data in the data caching circuit according to the data conversion instruction, so as to implement a data conversion on the multi-dimensional data, where

the data conversion instruction includes a descriptor used for indicating a shape of the multi-dimensional data, and the descriptor is used to determine a storage address corresponding to the multi-dimensional data, where

the data conversion circuit is used to perform the write and read operations on the multi-dimensional data according to the storage address.

Article A40. The method of article A39, where the data conversion instruction includes identification of the descriptor and/or content of the descriptor, and the content of the descriptor includes at least one shape parameter representing the shape of the multi-dimensional data and at least one address parameter representing an address of the multi-dimensional data.

Article A41. The method of article A40, where the address parameter of the multi-dimensional data includes a base address of a data datum point of the descriptor in data storage space of the multi-dimensional data.

Article A42. The method of article A40, where the shape parameter of the multi-dimensional data includes at least one of followings:

a size of the data storage space in at least one of N dimensional directions, a size of a storage area of the multi-dimensional data in at least one of N dimensional directions, an offset of the storage area in at least one of N dimensional directions, positions of at least two vertices at diagonal positions of N dimensional directions relative to the data datum point, and a mapping relationship between a data description position of the multi-dimensional data indicated by the descriptor and a data address of the multi-dimensional data indicated by the descriptor, where N is an integer greater than or equal to 0.

Article A43. The method of article A40, where the data conversion instruction includes data volume information and/or inter-dimension offset information about performing write and read operations in each dimension in the multi-dimensional data, and the data volume information and/or the inter-dimension offset information are determined according to the address parameter and/or the shape parameter in the descriptor.

Article A44. The method of any one of articles A39-A43, where the data processing apparatus further includes an external memory storing the multi-dimensional data, and the data conversion instruction includes a first descriptor and a second descriptor, where the method uses the data conversion circuit to perform following steps:

reading the multi-dimensional data from the external memory according to the first descriptor, so as to write the multi-dimensional data to the data caching circuit; and

reading the multi-dimensional data in the data caching circuit into the external memory according to the second descriptor.

Article A45. The method of any one of articles A39-A43, where the data conversion circuit is used to perform the write and read operations on the multi-dimensional data, so as to perform one of following conversion operations on the multi-dimensional data:

a data mirroring operation, a multi-angle data rotation operation, or a data transposition operation.

Article A46. The method of any one of articles A39-A43, where the data conversion instruction includes an operation parameter, and the method includes using the data conversion circuit to convert the multi-dimensional data according to the operation parameter.

Article A47. The method of article A46, where the data conversion circuit is used to perform following steps:

performing write and read operations on one or a plurality of parts of the multi-dimensional data in the data caching circuit according to the operation parameter, so as to implement a data conversion on the one or the plurality of parts of the multi-dimensional data.

Article A48. The method of article A46, where the data conversion circuit is used to perform following steps:

concatenating a plurality of parts of converted multi-dimensional data read from the data caching circuit for outputting according to the operation parameter.

Article A49. The method of article A46, where the data conversion circuit is used to perform following steps: combining a plurality of parts of unconverted multi-dimensional data read from the data caching circuit for outputting according to the operation parameter.

Article A50. The method of article A46, where the data conversion circuit is used to perform following operations according to the operation parameter:

writing the multi-dimensional data to the data caching circuit in order of a first dimension of the multi-dimensional data; and
reading the multi-dimensional data from the data caching circuit in order of a second dimension of the multi-dimensional data for outputting.

Article A51. An integrated circuit chip, including the data processing apparatus of any one of articles A1-A25.
Article A52. An electronic device, including the integrated circuit chip of article A51.
Article A53. A board card, including the integrated circuit chip of article A51.

According to different application scenarios, the electronic device or apparatus of the present disclosure may include a server, a cloud server, a server cluster, a data processing apparatus, a robot, a computer, a printer, a scanner, a tablet, a smart terminal, a PC device, an Internet of Things terminal, a mobile terminal, a mobile phone, a traffic recorder, a navigator, a sensor, a webcam, a camera, a video camera, a projector, a watch, a headphone, a mobile storage, a wearable device, a visual terminal, an autonomous driving terminal, a vehicle, a household appliance, and/or a medical device. The vehicle includes an airplane, a ship, and/or a car; the household appliance includes a television, an air conditioner, a microwave oven, a refrigerator, an electric rice cooker, a humidifier, a washing machine, an electric lamp, a gas cooker, and a range hood; and the medical device includes a nuclear magnetic resonance spectrometer, a B-ultrasonic scanner, and/or an electrocardiograph. The electronic device or apparatus of the present disclosure may also be applied to Internet, Internet of Things, data center, energy, transportation, public management, manufacturing, education, power grid, telecommunications, finance, retail, construction sites, medical, and other fields. Further, the electronic device or apparatus of the present disclosure may also be used in application scenarios including cloud, edge, and terminal related to artificial intelligence, big data, and/or cloud computing. In one or a plurality of embodiments, according to the solution of the present disclosure, an electronic device or apparatus with high computing power may be applied to a cloud device (such as the cloud server), while an electronic device or apparatus with low power consumption may be applied to a terminal device and/or an edge device (such as a smart phone or the webcam). In one or a plurality of embodiments, hardware information of the cloud device is compatible with hardware information of the terminal device and/or the edge device. As such, according to the hardware information of the terminal device and/or the edge device, appropriate hardware resources may be matched from hardware resources of the cloud device to simulate hardware resources of the terminal device and/or the edge device, so as to complete unified management, scheduling, and collaborative work of terminal-cloud integration or cloud-edge-terminal integration.

It is required to be explained that for the sake of brevity, the present disclosure describes some method embodiments as a series of actions and combinations thereof, but those skilled in the art may understand that the solution of the present disclosure is not limited by the order of actions described. Therefore, according to the present disclosure or under the teaching of the present disclosure, those skilled in the art may understand that some steps of the method embodiments may be performed in a different sequence or simultaneously. Further, those skilled in the art may understand that the embodiments described in the present disclosure may be regarded as optional embodiments; in other words, actions and modules involved thereof are not necessarily required for the implementation of a certain solution or some solutions of the present disclosure. Additionally, according to different solutions, descriptions of some embodiments of the present disclosure have their own emphases. In view of this, those skilled in the art may understand that, for a part that is not described in detail in a certain embodiment of the present disclosure, reference may be made to related descriptions in other embodiments.

For specific implementations, according to the present disclosure and under the teaching of the present disclosure, those skilled in the art may understand that several embodiments disclosed in the present disclosure may be implemented in other ways that are not disclosed in the present disclosure. For example, for units in the electronic device or apparatus embodiment, the present disclosure divides the units on the basis of considering logical functions, but there may be other ways of division during actual implementations. For another example, a plurality of units or components may be combined or integrated into another system, or some features or functions in the units or components may be selectively disabled. With respect to a connection between different units or components, the connection discussed above in combination with drawings may be direct or indirect coupling between the units or components. In some scenarios, the direct or indirect coupling involves a communication connection using an interface. The communication interface may support electrical, optical, acoustic, magnetic, or other forms of signal transmission.

In the present disclosure, units described as separate components may or may not be physically separated.

Components shown as units may or may not be physical units. The components or units may be located in a same position or distributed to a plurality of network units. Additionally, according to actual requirements, some or all of the units may be selected to achieve the purpose of the solution described in embodiments of the present disclosure. Additionally, in some scenarios, the plurality of units in the embodiments of the present disclosure may be integrated into one unit, or each of the units may be physically separated.

In some implementation scenarios, the integrated unit may be implemented in the form of a software program unit. If the integrated unit is implemented in the form of the software program unit and sold or used as an independent product, the integrated unit may be stored in a computer-readable memory. Based on this, when the solution of the present disclosure is embodied in the form of a software product (such as a computer-readable storage medium), the software product may be stored in a memory, and the software product may include several instructions used to enable a computer device (such as a personal computer, a server, or a network device) to perform part or all of steps of the method of the embodiments of the present disclosure. The memory includes but is not limited to an USB, a flash disk, a ROM (read only memory), a RAM (random access memory), a mobile hard disk, a magnetic disk, or an optical disc, and other media that may store a program code.

In other implementation scenarios, the integrated unit may be implemented in the form of hardware. In other words, the integrated unit may be a specific hardware circuit, which may include a digital circuit and/or an analog circuit. A physical implementation of a hardware structure of the circuit includes but is not limited to a physical component. The physical component includes but is not limited to a transistor, or a memristor, and the like. In view of this, various apparatuses (such as the computing apparatus or other processing apparatus) described in the present disclosure may be implemented by an appropriate hardware processor, such as a CPU (central processing unit), a GPU (graphics processing unit), an FPGA (field-programmable gate array), a DSP (digital signal processor), and an ASIC (application-specific integrated circuit), and the like. Further, the storage unit or the storage apparatus may be any appropriate storage medium (including a magnetic storage medium or a magneto-optical storage medium), such as a RRAM (resistive random access memory), a DRAM (dynamic random access memory), an SRAM (static random access memory), an EDRAM (enhanced dynamic random access memory), an HBM (high bandwidth memory), an HMC (hybrid memory cube), the ROM, and the RAM, and the like.

Although a plurality of embodiments of the present disclosure have been shown and described, it is obvious to those skilled in the art that such embodiments are provided only as examples. Those skilled in the art may think of many modifying, altering, and substituting methods without deviating from the thought and spirit of the present disclosure. It should be understood that various alternatives to the embodiments of the present disclosure described herein may be adopted in the practice of the present disclosure. The attached claims are intended to limit the scope of protection of the present disclosure and therefore to cover equivalents or alternatives within the scope of these claims.

**Claims**

1. A data processing apparatus, comprising a data caching circuit and a data conversion circuit, wherein

   the data caching circuit is configured to perform data caching; and
   the data conversion circuit is configured to perform write and read operations on to-be-converted data in the data caching circuit according to a data conversion instruction, so as to implement a data conversion on the to-be-converted data.

2. The data processing apparatus of claim 1, wherein the to-be-converted data is multi-dimensional data, and the data conversion instruction comprises data volume information and inter-dimension offset information about performing the write and read operations in each dimension in the multi-dimensional data.

3. The data processing apparatus of claim 2, wherein the data volume information comprises the number of data required to be written and read in each dimension, and the inter-dimension offset information comprises an address interval required to be spanned from a current dimension to a next dimension.

4. The data processing apparatus of claim 3, wherein the address interval is determined according to the number of data in the current dimension and space occupied by each piece of data.

5. The data processing apparatus of claim 3, wherein, in performing the write and read operations, the data conversion circuit is configured to perform following operations:

   according to data volume information of a dimension of the to-be-converted data, performing write and read operations on a corresponding number of data in the dimension in the data caching circuit; and
addressing the next dimension according to the inter-dimension offset information, so as to perform write and read operations on a corresponding number of data in the next dimension in the data caching circuit.

6. The data processing apparatus of claim 5, wherein the data conversion instruction further comprises write base address information and read base address information, wherein, in performing the write and read operations, the data conversion circuit is configured to perform following operations:

addressing the next dimension according to the write base address information and the inter-dimension offset information, so as to perform the write operation; and
addressing the next dimension according to the read base address information and the inter-dimension offset information, so as to perform the read operation.

7. The data processing apparatus of any one of claims 1-6, wherein the data conversion comprises performing one or more operations selected from a bypass operation, a multi-angle rotation operation, a mirroring operation, or a sequential conversion operation on the multi-dimensional data.

8. The data processing apparatus of claim 1, wherein the to-be-converted data is a to-be-converted matrix, and the data caching circuit comprises a caching storage array.

9. The data processing apparatus of claim 8, wherein the data conversion circuit is configured to perform following operations according to the data conversion instruction:

storing each row of the to-be-converted matrix to a corresponding row in the caching storage array in an in-row order, so as to form an intermediate matrix; and
reading each column of the intermediate matrix in an order from a first column to a last column of the intermediate matrix and in an in-column order in the caching storage array and outputting each column as a first row to a last row of the matrix in turn, so as to convert the to-be-converted matrix into a corresponding transposed matrix.

10. The data processing apparatus of claim 8, wherein the data conversion circuit is configured to perform following operations according to the data conversion instruction:

storing each row of the to-be-converted matrix to a corresponding row in the caching storage array in an in-row reverse order, so as to form an intermediate matrix; and
reading each column of the intermediate matrix in an order from a first column to a last column of the intermediate matrix and in an in-column order in the caching storage array and outputting each column as a first row to a last row of the matrix in turn, so as to convert the to-be-converted matrix into a corresponding 270-degree rotated matrix.

11. The data processing apparatus of claim 8, wherein the data conversion circuit is configured to perform following operations according to the data conversion instruction:

storing each row of the to-be-converted matrix to a corresponding row in the caching storage array in an in-row order, so as to form an intermediate matrix; and
reading each column of the intermediate matrix in an order from a first column to a last column of the intermediate matrix and in an in-column reverse order in the caching storage array and outputting each column as a first row to a last row of the matrix in turn, so as to convert the to-be-converted matrix into a corresponding 90-degree rotated matrix.

12. The data processing apparatus of claim 8, wherein the data conversion circuit is configured to perform following operations according to the data conversion instruction:

storing each row of the to-be-converted matrix to a corresponding row in the caching storage array in an in-row reverse order, so as to form an intermediate matrix; and
reading each row of the intermediate matrix in an order from a last row to a first row of the intermediate matrix and in an in-row order in the caching storage array and outputting each row as a first row to a last row of the matrix in turn, so as to convert the to-be-converted matrix into a corresponding 180-degree rotated matrix.

**13.** The data processing apparatus of claim 8, wherein the data conversion circuit is configured to perform following operations according to the data conversion instruction:

storing each row of the to-be-converted matrix to a corresponding row in the caching storage array in an in-row reverse order, so as to form an intermediate matrix; and
reading each row of the intermediate matrix in an order from a last row to a first row of the intermediate matrix and in the in-row reverse order in the caching storage array and outputting each row as a first row to a last row of the matrix in turn, so as to convert the to-be-converted matrix into a corresponding mirrored matrix.

**14.** The data processing apparatus of claim 1, wherein

the data caching circuit is configured to cache multi-dimensional data; and
the data conversion circuit is configured to perform write and read operations on the multi-dimensional data in the data caching circuit according to the data conversion instruction, so as to implement a data conversion on the multi-dimensional data, wherein
the data conversion instruction comprises a descriptor used for indicating a shape of the multi-dimensional data, and the descriptor is used to determine a storage address corresponding to the multi-dimensional data, wherein the data conversion circuit is configured to perform the write and read operations on the multi-dimensional data according to the storage address.

**15.** The data processing apparatus of claim 14, wherein the data conversion instruction comprises identification of the descriptor and/or content of the descriptor, and the content of the descriptor comprises at least one shape parameter representing the shape of the multi-dimensional data and at least one address parameter representing an address of the multi-dimensional data.

**16.** The data processing apparatus of claim 15, wherein the address parameter of the multi-dimensional data comprises a base address of a data datum point of the descriptor in data storage space of the multi-dimensional data.

**17.** The data processing apparatus of claim 15, wherein the shape parameter of the multi-dimensional data comprises at least one of followings:
a size of the data storage space in at least one of N dimensional directions, a size of a storage area of the multi-dimensional data in at least one of N dimensional directions, an offset of the storage area in at least one of N dimensional directions, positions of at least two vertices at diagonal positions of N dimensional directions relative to the data datum point, and a mapping relationship between a data description position of the multi-dimensional data indicated by the descriptor and a data address of the multi-dimensional data indicated by the descriptor, wherein N is an integer greater than or equal to 0.

**18.** The data processing apparatus of claim 15, wherein the data conversion instruction comprises data volume information and/or inter-dimension offset information about performing write and read operations in each dimension in the multi-dimensional data, and the data volume information and/or the inter-dimension offset information are determined according to the address parameter and/or the shape parameter in the descriptor.

**19.** The data processing apparatus of any one of claims 14-18, wherein the data processing apparatus further comprises an external memory storing the multi-dimensional data, and the data conversion instruction comprises a first descriptor and a second descriptor, wherein the data conversion circuit is configured to:

read the multi-dimensional data from the external memory according to the first descriptor, so as to write the multi-dimensional data to the data caching circuit; and
read the multi-dimensional data in the data caching circuit into the external memory according to the second descriptor.

**20.** The data processing apparatus of any one of claims 14-18, wherein the data conversion circuit is configured to perform the write and read operations on the multi-dimensional data, so as to perform one of following conversion operations on the multi-dimensional data:
a data mirroring operation, a multi-angle data rotation operation, or a data transposition operation.

**21.** The data processing apparatus of any one of claims 14-18, wherein the data conversion instruction comprises an operation parameter, and the data conversion circuit is configured to convert the multi-dimensional data according to the operation parameter.

**22.** The data processing apparatus of claim 21, wherein the data conversion circuit is configured to:
perform write and read operations on one or a plurality of parts of the multi-dimensional data in the data caching circuit according to the operation parameter, so as to implement a data conversion on the one or the plurality of parts of the multi-dimensional data.

**23.** The data processing apparatus of claim 21, wherein the data conversion circuit is configured to:
concatenate a plurality of parts of converted multi-dimensional data read from the data caching circuit for outputting according to the operation parameter.

**24.** The data processing apparatus of claim 21, wherein the data conversion circuit is configured to:
combine a plurality of parts of unconverted multi-dimensional data read from the data caching circuit for outputting according to the operation parameter.

**25.** The data processing apparatus of claim 21, wherein the data conversion circuit is configured to perform following operations according to the operation parameter:

writing the multi-dimensional data to the data caching circuit in order of a first dimension of the multi-dimensional data; and
reading the multi-dimensional data from the data caching circuit in order of a second dimension of the multi-dimensional data for outputting.

**26.** An implementation method for a data processing apparatus, wherein the data processing apparatus comprises a data caching circuit and a data conversion circuit, and the method comprises:

using the data caching circuit to perform data caching; and
using the data conversion circuit to perform write and read operations on to-be-converted data in the data caching circuit according to a data conversion instruction, so as to implement a data conversion on the to-be-converted data.

**27.** The method of claim 26, wherein the to-be-converted data is multi-dimensional data, and the data conversion instruction comprises data volume information and inter-dimension offset information about performing the write and read operations in each dimension in the multi-dimensional data.

**28.** The method of claim 27, wherein the data volume information comprises the number of data required to be written and read in each dimension, and the inter-dimension offset information comprises an address interval required to be spanned from a current dimension to a next dimension.

**29.** The method of claim 28, wherein the address interval is determined according to the number of data in the current dimension and space occupied by each piece of data.

**30.** The method of claim 28, wherein, in performing the write and read operations, the method comprises using the data conversion circuit to perform following operations:

according to data volume information of a dimension of the to-be-converted data, performing write and read operations on a corresponding number of data in the dimension in the data caching circuit; and
addressing the next dimension according to the inter-dimension offset information, so as to perform write and read operations on a corresponding number of data in the next dimension in the data caching circuit.

**31.** The method of claim 30, wherein the data conversion instruction further comprises write base address information and read base address information, wherein, in performing the write and read operations, the method comprises using the data conversion circuit to perform following operations:

addressing the next dimension according to the write base address information and the inter-dimension offset information, so as to perform the write operation; and
addressing the next dimension according to the read base address information and the inter-dimension offset information, so as to perform the read operation.

32. The method of any one of claims 26-31, wherein the data conversion comprises performing one or more operations selected from a bypass operation, a multi-angle rotation operation, a mirroring operation, or a sequential conversion operation on the multi-dimensional data.

33. The method of claim 26, wherein the to-be-converted data is a to-be-converted matrix, and the data caching circuit comprises a caching storage array.

34. The method of claim 33, wherein the data conversion circuit is used to perform following operations according to the data conversion instruction:

storing each row of the to-be-converted matrix to a corresponding row in the caching storage array in an in-row order, so as to form an intermediate matrix; and
reading each column of the intermediate matrix in an order from a first column to a last column of the intermediate matrix and in an in-column order in the caching storage array and outputting each column as a first row to a last row of the matrix in turn, so as to convert the to-be-converted matrix into a corresponding transposed matrix.

35. The method of claim 33, wherein the data conversion circuit is used to perform following operations according to the data conversion instruction:

storing each row of the to-be-converted matrix to a corresponding row in the caching storage array in an in-row reverse order, so as to form an intermediate matrix; and
reading each column of the intermediate matrix in an order from a first column to a last column of the intermediate matrix and in an in-column order in the caching storage array and outputting each column as a first row to a last row of the matrix in turn, so as to convert the to-be-converted matrix into a corresponding 270-degree rotated matrix.

36. The method of claim 33, wherein the data conversion circuit is used to perform following operations according to the data conversion instruction:

storing each row of the to-be-converted matrix to a corresponding row in the caching storage array in an in-row order, so as to form an intermediate matrix; and
reading each column of the intermediate matrix in an order from a first column to a last column of the intermediate matrix and in an in-column reverse order in the caching storage array and outputting each column as a first row to a last row of the matrix in turn, so as to convert the to-be-converted matrix into a corresponding 90-degree rotated matrix.

37. The method of claim 33, wherein the data conversion circuit is used to perform following operations according to the data conversion instruction:

storing each row of the to-be-converted matrix to a corresponding row in the caching storage array in an in-row reverse order, so as to form an intermediate matrix; and
reading each row of the intermediate matrix in an order from a last row to a first row of the intermediate matrix and in an in-row order in the caching storage array and outputting each row as a first row to a last row of the matrix in turn, so as to convert the to-be-converted matrix into a corresponding 180-degree rotated matrix.

38. The method of claim 33, wherein the data conversion circuit is used to perform following operations according to the data conversion instruction:

storing each row of the to-be-converted matrix to a corresponding row in the caching storage array in an in-row reverse order, so as to form an intermediate matrix; and
reading each row of the intermediate matrix in an order from a last row to a first row of the intermediate matrix and in the in-row reverse order in the caching storage array and outputting each row as a first row to a last row of the matrix in turn, so as to convert the to-be-converted matrix into a corresponding mirrored matrix.

39. The method of claim 26, further comprising:

using the data caching circuit to cache multi-dimensional data; and
using the data conversion circuit to perform write and read operations on the multi-dimensional data in the data caching circuit according to the data conversion instruction, so as to implement a data conversion on the multi-dimensional data, wherein

the data conversion instruction comprises a descriptor used for indicating a shape of the multi-dimensional data, and the descriptor is used to determine a storage address corresponding to the multi-dimensional data, wherein the data conversion circuit is used to perform the write and read operations on the multi-dimensional data according to the storage address.

40. The method of claim 39, wherein the data conversion instruction comprises identification of the descriptor and/or content of the descriptor, and the content of the descriptor comprises at least one shape parameter representing the shape of the multi-dimensional data and at least one address parameter representing an address of the multi-dimensional data.

41. The method of claim 40, wherein the address parameter of the multi-dimensional data comprises a base address of a data datum point of the descriptor in data storage space of the multi-dimensional data.

42. The method of claim 40, wherein the shape parameter of the multi-dimensional data comprises at least one of followings:

a size of the data storage space in at least one of N dimensional directions, a size of a storage area of the multi-dimensional data in at least one of N dimensional directions, an offset of the storage area in at least one of N dimensional directions, positions of at least two vertices at diagonal positions of N dimensional directions relative to the data datum point, and a mapping relationship between a data description position of the multi-dimensional data indicated by the descriptor and a data address of the multi-dimensional data indicated by the descriptor, wherein N is an integer greater than or equal to 0.

43. The method of claim 40, wherein the data conversion instruction comprises data volume information and/or inter-dimension offset information about performing write and read operations in each dimension in the multi-dimensional data, and the data volume information and/or the inter-dimension offset information are determined according to the address parameter and/or the shape parameter in the descriptor.

44. The method of any one of claims 39-43, wherein the data processing apparatus further comprises an external memory storing the multi-dimensional data, and the data conversion instruction comprises a first descriptor and a second descriptor, wherein the method uses the data conversion circuit to perform following steps:

reading the multi-dimensional data from the external memory according to the first descriptor, so as to write the multi-dimensional data to the data caching circuit; and
reading the multi-dimensional data in the data caching circuit into the external memory according to the second descriptor.

45. The method of any one of claims 39-43, wherein the data conversion circuit is used to perform the write and read operations on the multi-dimensional data, so as to perform one of following conversion operations on the multi-dimensional data:

a data mirroring operation, a multi-angle data rotation operation, or a data transposition operation.

46. The method of any one of claims 39-43, wherein the data conversion instruction comprises an operation parameter, and the method comprises using the data conversion circuit to convert the multi-dimensional data according to the operation parameter.

47. The method of claim 46, wherein the data conversion circuit is used to perform following steps:

performing write and read operations on one or a plurality of parts of the multi-dimensional data in the data caching circuit according to the operation parameter, so as to implement a data conversion on the one or the plurality of parts of the multi-dimensional data.

48. The method of claim 46, wherein the data conversion circuit is used to perform following steps:

concatenating a plurality of parts of converted multi-dimensional data read from the data caching circuit for outputting according to the operation parameter.

49. The method of claim 46, wherein the data conversion circuit is used to perform following steps:

combining a plurality of parts of unconverted multi-dimensional data read from the data caching circuit for outputting according to the operation parameter.

**50.** The method of claim 46, wherein the data conversion circuit is used to perform following operations according to the operation parameter:

writing the multi-dimensional data to the data caching circuit in order of a first dimension of the multi-dimensional data; and
reading the multi-dimensional data from the data caching circuit in order of a second dimension of the multi-dimensional data for outputting.

**51.** An integrated circuit chip, comprising the data processing apparatus of any one of claims 1-25.

**52.** An electronic device, comprising the integrated circuit chip of claim 51.

**53.** A board card, comprising the integrated circuit chip of claim 51.

100

Data caching circuit 102

Data conversion circuit 104

FIG. 1

200

Data caching circuit 102

Storage circuit 202

Data conversion circuit 104

Computing circuit 204

FIG. 2

300

| According to data volume information of a dimension of to-be-converted data, perform write and read operations on a corresponding number of data in the dimension in a data caching circuit | S302 |

| Address a next dimension according to inter-dimension offset information, so as to perform write and read operations on a corresponding number of data in the next dimension in the data caching circuit | S304 |

FIG. 3

400

| Store each row of a to-be-converted matrix to a corresponding row in a caching storage array in an in-row order, so as to form an intermediate matrix | S402 |

| Read each column of the intermediate matrix in an order from a first column to a last column of the intermediate matrix and in an in-column order in the caching storage array and output each column as a first row to a last row of the matrix in turn, so as to convert the to-be-converted matrix into a corresponding transposed matrix | S404 |

FIG. 4

500

Store each row of a to-be-converted matrix to a corresponding row in a caching storage array in an in-row reverse order, so as to form an intermediate matrix ⟋ S502

Read each column of the intermediate matrix in an order from a first column to a last column of the intermediate matrix and in an in-column order in the caching storage array and output each column as a first row to a last row of the matrix in turn, so as to convert the to-be-converted matrix into a corresponding 270-degree rotated matrix ⟋ S504

FIG. 5

600

Store each row of a to-be-converted matrix to a corresponding row in a caching storage array in an in-row order, so as to form an intermediate matrix ⟋ S602

Read each column of the intermediate matrix in an order from a first column to a last column of the intermediate matrix and in an in-column reverse order in the caching storage array and output each column as a first row to a last row of the matrix in turn, so as to convert the to-be-converted matrix into a corresponding 90-degree rotated matrix ⟋ S604

FIG. 6

700

| Store each row of a to-be-converted matrix to a corresponding row in a caching storage array in an in-row reverse order, so as to form an intermediate matrix | S702 |

↕

| Read each row of the intermediate matrix in an order from a last row to a first row of the intermediate matrix and in an in-row order in the caching storage array and output each row as a first row to a last row of the matrix in turn, so as to convert the to-be-converted matrix into a corresponding180-degree rotated matrix | S704 |

FIG. 7

800

| Store each row of a to-be-converted matrix to a corresponding row in a caching storage array in an in-row reverse order, so as to form an intermediate matrix | S802 |

↕

| Read each row of the intermediate matrix in an order from a last row to a first row of the intermediate matrix and in an in-row reverse order in the caching storage array and output each row as a first row to a last row of the matrix in turn, so as to convert the to-be-converted matrix into a corresponding mirrored matrix | S804 |

FIG. 8

900

S902

Perform, by using a data caching circuit, data caching

S904

Perform, by using a data conversion circuit, write and read operations on to-be-converted data in the data caching circuit according to a data conversion instruction, so as to implement a data conversion on the to-be-converted data

FIG. 9

X

Y

1-22

1-21

1-24

1-23

1-25

FIG. 10

1100

Read multi-dimensional data from an external memory according to a first descriptor, so as to write the multi-dimensional data to a data caching circuit — S1102

Read the multi-dimensional data in the data caching circuit into the external memory according to a second descriptor — S1104

FIG. 11

1200

Write multi-dimensional data to a data caching circuit in order of a first dimension of the multi-dimensional data — S1202

Read the multi-dimensional data from the data caching circuit in order of a second dimension of the multi-dimensional data for outputting — S1204

FIG. 12

1300

Convert multi-dimensional data according to an operation parameter — S1302

Perform write and read operations on one or a plurality of parts of the multi-dimensional data in a data caching circuit according to the operation parameter, so as to implement a data conversion on the one or the plurality of parts of the multi-dimensional data — S1304

Concatenate a plurality of parts of converted multi-dimensional data read from the data caching circuit for outputting according to the operation parameter — S1306

Combine a plurality of parts of unconverted multi-dimensional data read from the data caching circuit for outputting according to the operation parameter — S1308

FIG. 13

1400

Cache, by using a data caching circuit, multi-dimensional data ── S1402

Perform, by using a data conversion circuit, write and read operations on the multi-dimensional data in the data caching circuit according to a data conversion instruction, so as to implement a data conversion on the multi-dimensional data ── S1404

FIG. 14

1500

| Computing processing apparatus 1502 | Interface apparatus 1504 | Other processing apparatus 1506 |

Computing apparatus 1510 ••• Computing apparatus 1510

Storage apparatus 1508

FIG. 15

**1600**

Storage component 1604

| Storage unit 1610 | . . . | Storage unit 1610 |

Board card

Bus

Control component 1608

MCU

Chip 1602

Chip 1602

External interface apparatus 1606

External device 1612

FIG. 16

## INTERNATIONAL SEARCH REPORT

| International application No. |
|---|
| **PCT/CN2021/110357** |

### A. CLASSIFICATION OF SUBJECT MATTER

G06F 17/16(2006.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI, EPODOC, CNKI, CNPAT, IEEE: 二维, 三维, 多维, 维度, 数组, 矩阵, 转换, 转置, 旋转, 镜像, 旁路, 数据量, 尺寸, 偏移, 地址, 寻址, 空间, 行, 列, 描述符, two-dimensional, three-dimensional, multi-dimensional, dimension, array, matrix, transform, transpose, rotate, mirror, bypass, data volume, size, offset, address, space, row, column, descriptor

### C. DOCUMENTS CONSIDERED TO BE RELEVANT

| Category* | Citation of document, with indication, where appropriate, of the relevant passages | Relevant to claim No. |
|---|---|---|
| X | CN 110163362 A (SHANGHAI CAMBRICON INFORMATION TECHNOLOGY CO., LTD.) 23 August 2019 (2019-08-23) <br> description, paragraphs 119-216, and figure 3 | 1, 7-8, 14-15, 20-26, 32-33, 39-40, 45-53 |
| Y | CN 110163362 A (SHANGHAI CAMBRICON INFORMATION TECHNOLOGY CO., LTD.) 23 August 2019 (2019-08-23) <br> description, paragraphs 119-216, and figure 3 | 2-6, 9-13, 16-19, 27-31, 34-38, 41-44 |
| Y | CN 111193837 A (XI'AN XIANGTENG MICROELECTRONICS TECHNOLOGY CO., LTD.) 22 May 2020 (2020-05-22) <br> description, paragraphs 78-130 | 2-6, 16-19, 27-31, 41-44 |
| Y | CN 1122026 A (INDUSTRIAL TECHNOLOGY RESEARCH INSTITUTE) 08 May 1996 (1996-05-08) <br> description page 9 paragraph 3 | 9-13, 34-38 |
| A | CN 109190755 A (INSTITUTE OF COMPUTING TECHNOLOGY, CHINESE ACADEMY OF SCIENCES) 11 January 2019 (2019-01-11) <br> entire document | 1-53 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 September 2021** | **03 November 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT

| International application No. |
|---|
| **PCT/CN2021/110357** |

**C.      DOCUMENTS CONSIDERED TO BE RELEVANT**

| Category* | Citation of document, with indication, where appropriate, of the relevant passages | Relevant to claim No. |
|---|---|---|
| A | CN 109635032 A (FUJIAN KAIMI NETWORK SCIENCE & TECHNOLOGY CO., LTD.) 16 April 2019 (2019-04-16) entire document | 1-53 |

Form PCT/ISA/210 (second sheet) (January 2015)

**INTERNATIONAL SEARCH REPORT**
Information on patent family members

International application No.

**PCT/CN2021/110357**

| Patent document cited in search report | | | Publication date (day/month/year) | Patent family member(s) | | | Publication date (day/month/year) |
|---|---|---|---|---|---|---|---|
| CN | 110163362 | A | 23 August 2019 | CN | 110163355 | A | 23 August 2019 |
| | | | | EP | 3651075 | A1 | 13 May 2020 |
| | | | | US | 2020159533 | A1 | 21 May 2020 |
| | | | | JP | 2020126596 | A | 20 August 2020 |
| | | | | KR | 20200110152 | A | 23 September 2020 |
| | | | | WO | 2019157812 | A1 | 22 August 2019 |
| | | | | TW | 201935265 | A | 01 September 2019 |
| CN | 111193837 | A | 22 May 2020 | None | | | |
| CN | 1122026 | A | 08 May 1996 | None | | | |
| CN | 109190755 | A | 11 January 2019 | None | | | |
| CN | 109635032 | A | 16 April 2019 | None | | | |

Form PCT/ISA/210 (patent family annex) (January 2015)

**REFERENCES CITED IN THE DESCRIPTION**

**Patent documents cited in the description**

- CN 202011036302
- CN 202011036325